# EUROPEAN PATENT APPLICATION

(11) **EP 4 375 892 A1**
(43) Date of publication of application: **29.05.2024**
(21) Application number: 22857667.4
(22) Date of filing: 11.08.2022
(51) Int. Cl.: G06N 20/00

(54) **DISTRIBUTED TRAINING METHOD FOR AI MODEL AND RELATED DEVICE**

(30) Priority: 20.08.2021 CN 202110963715
(71) Applicant: Huawei Cloud Computing Technologies Co., Ltd., Guiyang, Guizhou 550025 (CN)
(72) Inventor: LIAN, Yunwen, Guiyang, Guizhou 550025 (CN); LI, Yi, Guiyang, Guizhou 550025 (CN); JIN, Xiaoxian, Guiyang, Guizhou 550025 (CN)
(74) Representative: Maiwald GmbH
(86) International application number: PCT/CN2022/111716
(87) International publication number: WO 2023/020355

(57) **Abstract**

This application relates to the field of artificial intelligence technologies, and provides a distributed training method for an AI model and a related device. The method is applied to an AI platform, the AI platform is associated with a computing resource pool, the computing resource pool includes a plurality of computing nodes for distributed training of an AI model, and each of the plurality of computing nodes performs a training task for the distributed training of the AI model. The method includes: performing fault isolation on a first computing node, where the first computing node is a faulty computing node in the plurality of computing nodes; determining a second computing node, where the second computing node is a computing node other than the plurality of computing nodes in the computing resource pool; and configuring the second computing node, so that the second computing node replaces the first computing node to execute a training task. In embodiments of this application, fault recovery duration can be shortened.

## Description

This application claims priority to Chinese Patent Application No. 202110963715.7, filed with the China National Intellectual Property Administration on August 20, 2021 and entitled "DISTRIBUTED TRAINING METHOD FOR AI MODEL AND RELATED DEVICE", which is incorporated herein by reference in its entirety.

### TECHNICAL FIELD

Embodiments of this application relate to the field of artificial intelligence (artificial intelligence, AI) technologies, and in particular, to a distributed training method for an AI model and a related device.

### BACKGROUND

Currently, the AI field is mainly related to three key aspects: training data, AI model, and a calculation capability of hardware. A training process of the AI model is a process in which a large amount of training data is input to the AI model deployed on the hardware, and the AI model processes and learns the training data by using the calculation capability of the hardware. In most cases, more training data indicates better learning effect and higher accuracy of the AI model. However, as a scale of problems resolved by using the AI model increases, a required amount of data used for AI model training continuously increases accordingly. Consequently, this raises a higher requirement on the calculation capability of the hardware. For example, some current AI models have 170 billion parameters and 45 T training data used for training, and it takes 355 GPUs to complete the training for one year. To shorten training duration, a common method is to increase a scale of parallel computing resources used for a training job of an AI model, for example, increase the scale of the computing resources for the training job of the AI model to 4096 GPUs. In this way, the scale of the computing resources is more than 11 times of the original 355 GPUs, so that the training duration of the AI model can be shortened to about one month.

However, as the scale of the computing resources used for the training job increases, failure rates of hardware and software in the training process greatly increase, and faults in the training process cause the entire training job to fail and therefore exit or be interrupted. In addition, because the scale of the computing resources for the training job increases, recovery duration of the faulty training job increases. As a result, overall completion duration of the training job increases.

### SUMMARY

This application provides a distributed training method for an AI model and a related device, to reduce fault recovery duration in a training process.

The foregoing and other objectives are achieved by the subject matter of the independent claims. Further implementation forms are apparent from the dependent claims, the description, and the figures.

Particular embodiments are outlined in the attached independent claims, with other embodiments in the dependent claims.

According to a first aspect, this application relates to a distributed training method for an artificial intelligence AI model, applied to an AI platform. The AI platform is associated with a computing resource pool, the computing resource pool includes a plurality of computing nodes for distributed training of an AI model, and each of the plurality of computing nodes performs a training task for the distributed training of the AI model. The method includes: performing fault isolation on a first computing node, where the first computing node is a faulty computing node in the plurality of computing nodes; determining a second computing node, where the second computing node is a computing node other than the plurality of computing nodes in the computing resource pool; and configuring the second computing node, so that the second computing node replaces the first computing node to execute a training task.

In this application, the AI platform may perform distributed training on the AI model. The AI platform is associated with the computing resource pool. The computing resource pool includes the plurality of computing nodes used for the distributed training of the AI model. Each of the plurality of computing nodes performs one training task for the distributed training of the AI model. For example, each computing node performs one training task for the distributed training of the AI model. In a distributed training process of the AI model, the AI platform may determine whether there is the faulty first computing node in the plurality of computing nodes. If determining that there is the faulty first computing node in the plurality of computing nodes, the AI platform performs fault isolation on the first computing node, so that the first computing node is no longer configured to perform the training task for the distributed training of the AI model. In addition, the AI platform may determine the second computing node other than the plurality of computing nodes in the computing resource pool, and configure the second computing node, so that the second computing node is used to replace the first computing node to perform the training task for the distributed training of the AI model. In this way, in this application, when the computing node for the distributed training of the AI model is faulty, the faulty first computing node is dynamically isolated, and the second computing node acts as supplement to replace the first computing node to continue the training. This ensures that the training process is not interrupted, thereby not affecting overall training duration, and reducing fault recovery duration. It should be understood that a calculation capability of the second computing node is the same as or equivalent to that of the first computing node, or a specification of the second computing node is the same as or equivalent to that of the first computing node. This ensures that the second computing node can successfully replace the first computing node. It should be noted that, if the first computing node further executes another training task for the distributed training of the AI model in addition to the training task for the distributed training of the AI model, after fault isolation is performed on the first computing node, the first computing node is no longer configured to execute the training task affected by the faulty first computing node. The second computing node replaces the first computing node to execute the training task affected by the faulty first computing node. The training task affected by the faulty first computing node includes one or more of the following: the training task for the distributed training of the AI model, and the another training task for the distributed training of the AI model.

In a possible implementation, the first computing node is the faulty computing node when the AI platform monitors one or more of the following cases: a hardware fault occurs on the first computing node, a training process corresponding to the training task executed by the first computing node exits, and the first computing node reports a fault.

In this implementation, the AI platform may monitor that the hardware fault occurs on the first computing node, the training process corresponding to the training task executed by the first computing node exits, and the first computing node reports the fault to the AI platform. If monitoring the one or more of the foregoing cases, the AI platform determines that the first computing node is the faulty computing node, and triggers determining that the second computing node replaces the first computing node to execute the training task. In this way, the AI platform can find in time that there is the fault in the distributed training of the AI model, so that fault recovery duration is reduced. It should be noted that, if the first computing node further executes the another training task for the distributed training of the AI model in addition to the training task for the distributed training of the AI model, when the hardware fault occurs on the first computing node, the training task affected by the faulty first computing node includes the training task for the distributed training of the AI model and the another training task for the distributed training of the AI model. Further, that a training process corresponding to the training task executed by the first computing node exits includes that the training process corresponding to the training task that is for the distributed training of the AI model and that is executed by the first computing node exits and a training process corresponding to the another training task for the distributed training of the AI model exits. That is, the first computing node is the faulty computing node provided that the training process exits on the first computing node. When the training process corresponding to the training task for the distributed training of the AI model exits, the training task affected by the faulty first computing node is the training task for the distributed training of the AI model. When the training process corresponding to the another training task for the distributed training of the AI model exits, the training task affected by the faulty first computing node is the another training task for the distributed training of the AI model. When both the training process corresponding to the training task for the distributed training of the AI model and the training process corresponding to the another training task for the distributed training of the AI model exit, the training task affected by the faulty first computing node includes the training task for the distributed training of the AI model and the another training task for the distributed training of the AI model. In addition, the fault reported by the first computing node includes the fault reported by the first computing node for the training task for the distributed training of the AI model and the fault reported by the first computing node for the another training task for the distributed training of the AI model. That is, the first computing node is the faulty computing node provided that the first computing node reports the fault. When the fault reported by the first computing node is the fault reported by the first computing node for the training task for the distributed training of the AI model, the training task affected by the faulty first computing node is the training task for the distributed training of the AI model. When the fault reported by the first computing node includes the fault reported by the first computing node for the another training task for the distributed training of the AI model, the training task affected by the faulty first computing node is the another training task for the distributed training of the AI model. When the fault reported by the first computing node includes the fault reported by the first computing node for the training task for the distributed training of the AI model and the fault reported by the first computing node for the another training task for the distributed training of the AI model, the training task affected by the faulty first computing node includes the training task for the distributed training of the AI model and the another training task for the distributed training of the AI model.

In a possible implementation, if the AI platform monitors that the hardware fault occurs on the first computing node, and does not monitor that the training process corresponding to the training task executed by the first computing node exits, after the performing fault isolation on a first computing node, the method includes: sending a training process stopping notification to the first computing node, where the training process stopping notification indicates the first computing node to stop the training process corresponding to the executed training task.

In this implementation, for some types of hardware faults, the training process on the computing node does not exit or stop, and only calculation performance of the computing node is affected. When the hardware fault occurs on the first computing node, to ensure that the second computing node can successfully replace the first computing node to execute the training task, the AI platform sends the training process stopping notification to the first computing node, to indicate the first computing node to stop the training process corresponding to the executed training task. In this way, when the second computing node has executed the training task originally executed by the first computing node, the first computing node does not continue the execution of the training task. It should be understood that the training process stopping notification indicates the first computing node to stop the training process corresponding to the training task affected by the faulty first computing node. It should be noted that, if the first computing node further executes the another training task for the distributed training of the AI model in addition to the training task for the distributed training of the AI model, when the training task affected by the faulty first computing node is the training task for the distributed training of the AI model, the training process stopping notification indicates the first computing node to stop the training process corresponding to the training task for the distributed training of the AI model. When the training task affected by the faulty first computing node is the another training task for the distributed training of the AI model, the training process stopping notification indicates the first computing node to stop the training process corresponding to the another training task for the distributed training of the AI model. When the training task affected by the faulty first computing node includes the training task for the distributed training of the AI model and the another training task for the distributed training of the AI model, the training process stopping notification indicates the first computing node to stop the training process corresponding to the training task for the distributed training of the AI model and the training process corresponding to the another training task for the distributed training of the AI model.

In a possible implementation, after the performing fault isolation on a first computing node, and before the determining a second computing node, the method further includes: sending a training process suspension notification to a third computing node, where the third computing node is a computing node that is not faulty in the plurality of computing nodes, and the training process suspension notification indicates the third computing node to suspend a training process corresponding to a training task for the distributed training of the AI model.

In this implementation, the distributed training of the AI model includes calculation of the plurality of computing nodes and gradient synchronization. When the first computing node is faulty, if the training process of the third computing node that is not faulty is not suspended, the third computing node performs gradient synchronization after obtaining a gradient through calculation. However, the first computing node undergoes the fault isolation due to the fault, and cannot participate in the gradient synchronization. In this case, a problem occurs in the gradient synchronization. Therefore, to avoid the problem that occurs in the gradient synchronization, the training process executed by the third computing node needs to be suspended until a newly added second computing node participates in performing training.

In a possible implementation, the training process suspension notification specifically indicates the third computing node to suspend, after the third computing node completes gradient calculation of the distributed training of the AI model, the training process corresponding to the training task for the distributed training of the AI model.

In this implementation, after the gradient calculation ends, the third computing node that is not faulty suspends the training process executed by the third computing node. In this way, after the newly added second computing node participates in performing training, gradient synchronization may be directly performed, so that fault recovery duration is reduced.

In a possible implementation, after the determining a second computing node, the method further includes: sending a training continuing notification to the third computing node, where the training continuing notification indicates the third computing node to delete the first computing node and add the second computing node in a communication topology in a training framework of the distributed training of the AI model, and to restore the training process corresponding to the training task for the distributed training of the AI model, and the communication topology is used for gradient synchronization of the distributed training of the AI model.

In this implementation, the AI platform sends a training continuing notification to the third computing node. After receiving the training continuing notification, the third computing node knows that the second computing node replaces the faulty first computing node to perform training. Therefore, the first computing node is deleted and the second computing node is added in a communication topology in a training framework of the distributed training of the AI model. Therefore, the third computing node may perform gradient synchronization with the second computing node, so that the second computing node obtains synchronized training parameters.

In a possible implementation, if the second computing node has not been determined, the method further includes: sending a training continuing notification to the third computing node, where the training continuing notification indicates the third computing node to delete the first computing node in a communication topology in a training framework of the distributed training of the AI model, and to restore the training process corresponding to the training task for the distributed training of the AI model, and the communication topology is used for gradient synchronization of the distributed training of the AI model.

In this implementation, if the second computing node cannot be applied for to replace the faulty first computing node, to ensure that the training is not interrupted or does not exit, and the training can continue, the faulty first computing node is discarded, and only the third computing node that is not faulty is configured to perform training.

According to a second aspect, this application relates to a distributed training apparatus for an artificial intelligence AI model. For advantageous effects, refer to descriptions of the first aspect. Details are not described herein again. The distributed training apparatus for an AI model has functions of implementing the behavior in the method embodiment in the first aspect. The functions may be implemented by hardware, or may be implemented by hardware executing corresponding software. The hardware or the software includes one or more modules corresponding to the foregoing functions. In a possible implementation, the distributed training apparatus for an AI model is used in an AI platform, the AI platform is associated with a computing resource pool, the computing resource pool includes a plurality of computing nodes for distributed training of an AI model, and each of the plurality of computing nodes performs a training task for the distributed training of the AI model. The apparatus includes: a resource management module, configured to perform fault isolation on a first computing node, where the first computing node is a faulty computing node in the plurality of computing nodes; and a task scheduling module, configured to: determine a second computing node, where the second computing node is a computing node other than the plurality of computing nodes in the computing resource pool; and configure the second computing node, so that the second computing node replaces the first computing node to execute a training task.

In a possible implementation, the first computing node is the faulty computing node when the AI platform monitors one or more of the following cases: a hardware fault occurs on the first computing node, a training process corresponding to the training task executed by the first computing node exits, and the first computing node reports a fault.

In a possible implementation, if the AI platform monitors that the hardware fault occurs on the first computing node, and does not monitor that the training process corresponding to the training task executed by the first computing node exits, after the performing fault isolation on a first computing node, the task scheduling module is further configured to send a training process stopping notification to the first computing node, where the training process stopping notification indicates the first computing node to stop the training process corresponding to the executed training task.

In a possible implementation, after the performing fault isolation on a first computing node, and before the determining a second computing node, the task scheduling module is further configured to send a training process suspension notification to a third computing node, where the third computing node is a computing node that is not faulty in the plurality of computing nodes, and the training process suspension notification indicates the third computing node to suspend a training process corresponding to a training task for the distributed training of the AI model.

In a possible implementation, the training process suspension notification specifically indicates the third computing node to suspend, after the third computing node completes gradient calculation of the distributed training of the AI model, the training process corresponding to the training task for the distributed training of the AI model.

In a possible implementation, after the determining a second computing node, the task scheduling module is further configured to send a training continuing notification to the third computing node, where the training continuing notification indicates the third computing node to delete the first computing node and add the second computing node in a communication topology in a training framework of the distributed training of the AI model, and to restore the training process corresponding to the training task for the distributed training of the AI model, and the communication topology is used for gradient synchronization of the distributed training of the AI model.

In a possible implementation, if the second computing node has not been determined, the task scheduling module is further configured to send a training continuing notification to the third computing node, where the training continuing notification indicates the third computing node to delete the first computing node in a communication topology in a training framework of the distributed training of the AI model, and to restore the training process corresponding to the training task for the distributed training of the AI model, and the communication topology is used for gradient synchronization of the distributed training of the AI model.

According to a third aspect, this application relates to a computing device. The computing device includes a processor and a memory, where the memory stores computer instructions, and the processor executes the computer instructions to implement the method according to the first aspect and the possible implementations of the first aspect.

According to a fourth aspect, this application relates to a computer-readable storage medium. The computer-readable storage medium stores computer instructions, and when the computer instructions in the computer-readable storage medium are executed by a computing device, the computing device is enabled to perform the method according to first aspect and the possible implementations of the first aspect, or the computing device is enabled to implement functions of the apparatus according to the second aspect and the possible implementations of the second aspect.

According to a fifth aspect, this application relates to a computer program product including instructions, and when the computer program product runs on a computing device, the computing device is enabled to perform the method according to the first aspect and the possible implementations of the first aspect, or the computing device is enabled to implement functions of the apparatus according to the second aspect and the possible implementations of the second aspect.

Details of one or more embodiments are set forth in the accompanying drawings and the descriptions below. Other features, objectives, and advantages are apparent from the description, figures, and claims.

### BRIEF DESCRIPTION OF DRAWINGS

The following describes the accompanying drawings used in embodiments of this application.
FIG. 1 is a schematic diagram of distributed training of data parallel;
FIG. 2 is a schematic diagram of a structure of an AI platform 210 according to an example embodiment of this application;
FIG. 3 is a schematic diagram of an application scenario of an AI platform 210 according to an example embodiment of this application;
FIG. 4 is a schematic diagram of deployment of an AI platform 210 according to an example embodiment of this application;
FIG. 5 is a schematic diagram of a structure of a computing device 500 on which an AI platform 210 is deployed according to an example embodiment of this application;
FIG. 6 is a schematic diagram of a processing procedure timeline of a training job;
FIG. 7 is a schematic flowchart of a distributed training method for an AI model according to an example embodiment of this application;
FIG. 8 is a schematic diagram of a user interaction interface according to an example embodiment of this application;
FIG. 9 is a schematic diagram of gradient synchronization according to an example embodiment of this application;
FIG. 10 is a schematic diagram of updating a communication topology in a training framework according to an example embodiment of this application;
FIG. 11 is another schematic diagram of updating a communication topology in a training framework according to an example embodiment of this application;
FIG. 12 is a schematic diagram of a processing procedure timeline of a training job according to an example embodiment of this application;
FIG. 13 is a schematic flowchart of another distributed training method for an AI model according to an example embodiment of this application; and
FIG. 14 is a schematic diagram of a structure of a computing device according to an example embodiment of this application.

### DESCRIPTION OF EMBODIMENTS

Currently, artificial intelligence is booming. Machine learning is a core means to implement AI, and machine learning has permeated various industries such as medicine, transportation, education, and finance. Not only professionals but also non-AI technology professions in various industries expect to complete specified tasks by using AI and machine learning.

To facilitate understanding of the technical solutions and embodiments provided in this application, the following describes in detail concepts such as an AI model, AI model training, distributed training, and an AI platform.

The AI model is a mathematical algorithm model that resolves practical problems based on the idea of machine learning. The AI model includes a large quantity of parameters and calculation formulas (or calculation rules). The parameters of the AI model are values obtained by training the AI model by using training datasets. For example, the parameters of the AI model are weights of the calculation formulas or calculation factors in the AI model. The AI model further includes some hyper (hyper)-parameters. The hyperparameters are parameters that cannot be obtained by training the AI model by using the training dataset. The hyperparameters can be used to guide construction of the AI model or the AI model training. There are a plurality of types of hyperparameters, for example, a quantity of iterations (iterations) of the AI model training, a learning rate (leaning rate), a batch size (batch size), a quantity of layers of the AI model, and a quantity of neurons at each layer. In other words, a difference between the hyperparameter and the parameter of the AI model lies in that: a value of the hyperparameter of the AI model cannot be obtained by analyzing the training dataset while the value of the parameter of the AI model may be modified and determined by analyzing the training dataset in a training process. It should be noted that the AI model mentioned in this application is a general term, and the AI model includes a deep learning model, a machine learning model, and the like.

There are various AI models. A widely used type of Al model is a neural network model. The neural network model is a type of mathematical algorithm model that emulates a structure and functions of a biological neural network (an animal's central nervous system). One neural network model may include a plurality of neural network layers with different functions, and each layer includes a parameter and a calculation formula. Different layers in the neural network model have different names based on different calculation formulas or different functions. For example, a layer for convolution calculation is referred to as a convolutional layer, and the convolutional layer is usually used to perform feature extraction on an input signal (such as an image). One neural network model may alternatively include a combination of a plurality of existing neural network models. Neural network models of different structures may be used in different scenarios (such as classification and recognition), or have different effects when used in a same scenario. Differences in the structures of the neural network models specifically include one or more of the following: different quantities of network layers in a neural network model, different sequences of various network layers, and different weights, parameters, or calculation formulas at each network layer. There are already various types of high-accuracy neural network models used in application scenarios such as recognition or classification in the industry. Some of the neural network models, after being trained by using specified training datasets, may be separately used to complete a given task, or to complete a task in combination with another neural network model (or another functional module).

A common AI model needs to be trained before being used to complete a task.

The AI model training means make an AI model fit a law of the existing data using existing data and a specified approach, and to determine parameters of the AI model. A training dataset needs to be prepared for training an AI model, and the AI model training may be classified into supervised training (supervised training) and unsupervised training (unsupervised training) depending on whether training data in the training dataset is labeled (that is, whether the data has specified label information, such as a type, a name, or a label box included in the data). When supervised training is performed on the AI model, the training data in the training dataset used for training is labeled (label). During the AI model training, the training data in the training dataset is used as an input of the AI model. The AI model calculates the input training data to obtain an output value of the AI model, uses the label corresponding to the training data as a reference of the output value of the AI model, calculates a loss (loss) value between the output value of the AI model and the label corresponding to the training data by using a loss function (loss function), and adjusts parameters of the AI model based on the loss value. The AI model is iteratively trained by using all pieces of training data in the training dataset, and the parameters of the AI model are continuously adjusted until the AI model can output, based on the input training data, high-accuracy output value that is the same as or similar to the label corresponding to the training data. If unsupervised training is performed on the AI model, the training data in the dataset used for training is not labeled. The training data in the training dataset is sequentially input to the AI model, and the AI model gradually identifies an association between the training data in the training dataset and a potential rule until the AI model can be used to determine or identify a type or a feature of the input data, for example, clustering. After receiving a large amount of training data, an AI model used for the clustering may learn a feature of each piece of training data and an association and a difference between the training data, and automatically classify the training data into a plurality of types. Different AI models may be used for different task types. Some AI models may be trained only in a supervised learning manner. Some AI models may be trained only in an unsupervised learning manner. Some AI models may be trained both in the supervised learning manner and the unsupervised learning manner. A completely trained AI model can be used to complete a specified task. Usually, all the AI models in machine learning need to be trained in the supervised learning manner. Through AI model training in the supervised learning manner, an AI model can learn, from a labeled training dataset, an association between training data in the training dataset and the corresponding label in a more targeted manner, so that the completely trained AI model has higher accuracy when being used to predict other input inference data.

A loss function is a function used to measure an extent to which an AI model is trained (that is, used to calculate a difference between a result predicted by the AI model and an actual target). In a training process of the AI model, because it is expected that an output of the AI model is maximally close to a value that is actually expected to be predicted, a current prediction value of input data of the AI model may be compared with an actually expected target value (namely, a label of the input data), and parameters of the AI model are then updated based on a difference between the current prediction value and the target value. During each training, the difference between the current value predicted by the AI model and the actual target value is determined by using the loss function, to update the parameters of the AI model until the AI model can predict the actually expected target value or a value that is very close to the actually expected target value. That is, if the loss function is less than a threshold and is stable, it is considered that the AI model is completely trained.

A gradient is a vector that includes a partial derivative of a function. In the training process of the AI model, the parameters of the model need to be adjusted to make a loss function in a next iteration smaller, and the parameters of the model are updated by usually using a gradient descent method. Therefore, during each round of iteration, a gradient of the loss function corresponding to training data in the current round needs to be calculated, and the parameters of the AI model are further updated based on the gradient.

Distributed training is one of common acceleration means in the training process of the AI model. The distributed training means that training is split to a plurality of independent computing nodes for independent calculation, and results are then periodically summarized and redistributed, so that the training process of the AI model is accelerated. The distributed training may include distributed training of data parallel.

The distributed training of the data parallel means that a same AI model is deployed on a plurality of computing nodes, training data in a training dataset is distributed to the plurality of computing nodes for simultaneous calculation, the AI model is trained on each computing node, gradients of model parameters generated on all the computing nodes are aggregated, and the model parameters are then updated. Specifically, there are two options for splitting the training dataset to m computing nodes. (1) A batch size on each of the m computing nodes is the same as that used when a single computing node performs calculation, and the batch size is an amount of training data selected from the training dataset before each parameter adjustment. (2) The batch size on each computing node is a batch size obtained by dividing, by m, the batch size used when the single computing node performs calculation. In this way, a global batch size obtained after aggregation remains unchanged. In subsequent descriptions of embodiments of this application, a training method for an AI model is described by using the distributed training of the data parallel as an example.

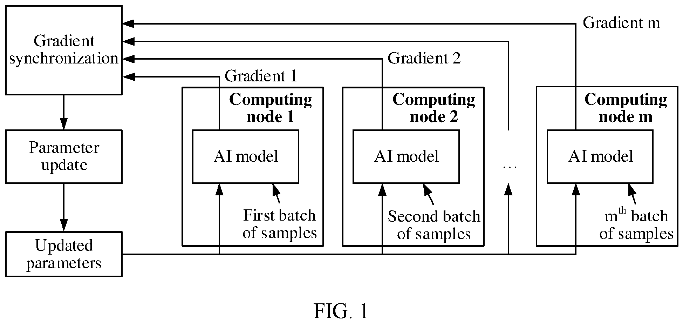

A process of the distributed training of the data parallel may roughly includes two phases: calculation of a plurality of computing nodes and gradient synchronization. FIG. 1 is a schematic diagram of an example of distributed training of data parallel. As shown in FIG. 1, m computing nodes (which are a computing node 1, a computing node 2, ..., and a computing node m respectively) perform calculation of the distributed training of data parallel. In each round of training of the distributed training, if samples trained on each computing node are different, the m computing nodes have m batches of samples (which are a first batch of samples, a second batch of samples, ..., and a m^{th} batch of samples respectively), and if each of the m computing nodes obtains a gradient through calculation, the m computing nodes have m gradients (which are a gradient 1, a gradient 2, ..., and a gradient m respectively). During gradient synchronization, the m gradients are averaged to obtain an average value of the m gradients. Parameters of this AI model are updated based on the average value of the m gradients, and a next round of training is then performed based on the AI model obtained after the parameters are updated.

An AI platform is a platform that provides a convenient AI development environment and convenient development tools for AI developers and users. Various pre-trained AI models or AI sub-models for resolving different problems are built into the AI platform. The AI platform can search for and create suitable AI models based on a requirement of a user. The user only needs to determine the requirement of the user on the AI platform, and uploads, to the AI platform, a training dataset prepared as prompted, and the AI platform can obtain, through training for the user, an AI model that can be used to meet the requirement of the user. Alternatively, the user uploads, to the AI platform, an algorithm (also referred to as an initial AI model) and a training dataset that are of the user and that are prepared as prompted, and the AI platform may obtain, through training based on the algorithm and the training dataset that are of the user, an AI model that can be used to meet the requirement of the user. The user may complete a specified task of the user by using the completely trained AI model. It should be understood that in this application, an AI model pre-trained by the AI platform (for example, an algorithm uploaded by the user, an algorithm built on the AI platform, or a pre-trained model) is referred to as an initial AI model.

Deep learning (Deep Learning) is a machine learning technology based on a deep neural network algorithm. A main feature of deep learning is to process and analyze data by using multiple nonlinear transformations. Deep learning is mainly used in scenarios such as perception and decision-making in the field of artificial intelligence, such as image and speech recognition, natural speech translation, and computer games.

A container (Container) is a relatively independent and isolated environment that is constructed by using a virtualization technology in a computer operating system and that is used for process running. The environment may include independent file systems, namespaces, and resource views. The container is used to simplify a software deployment procedure, enhance software portability and security, and improve system resource utilization.

A job (Job) is a set of programs that need to be executed to complete a specified computing service. The job usually corresponds to a group of processes, containers, or other runtime entities on one or more computers.

A task (Task) is a single program in a group of programs corresponding to a job. The task usually corresponds to a process, a container, or another runtime entity on a computer. One job includes at least one task.

A training job is a set of programs that need to be executed to complete training of an initial AI model. Completion of a training job indicates that training of an initial AI model is completed, and a completely trained AI model is obtained.

A training task is a single program in a group of programs corresponding to a training job. That is, a task logic instance submitted by the user identifies a difference between the tasks. For example, a training task for an initial AI model is used to perform multi-round iterative training on the initial AI model. One training job includes at least one training task.

A training process is a process of a training task executed on a computing node. One training process corresponds to one training task, and one computing node may execute one or more training tasks. Therefore, there are one or more training processes on one computing node.

A training framework is a tool package or function package on which a training process of an AI model needs to depend, and is a running program framework on which each training task in a training job needs to depend. In an initial phase of deep learning, each deep learning researcher needs to write a large amount of repeated code. To improve work efficiency, the researcher writes these code into a framework, and puts the framework online for all researchers to use. The framework is also referred to as the training framework. Currently, most popular deep learning frameworks in the world are Tensorflow, Caffe, Theano, MXNet, Torch, and PyTorch.

A computing resource pool includes computing resources that can be used for AI model training. The computing resources may be computing nodes. For a training job, computing resources is all computing nodes used in a training process, and each computing node may be a computing device (for example, a server), or may be a computing card (for example, a GPU).

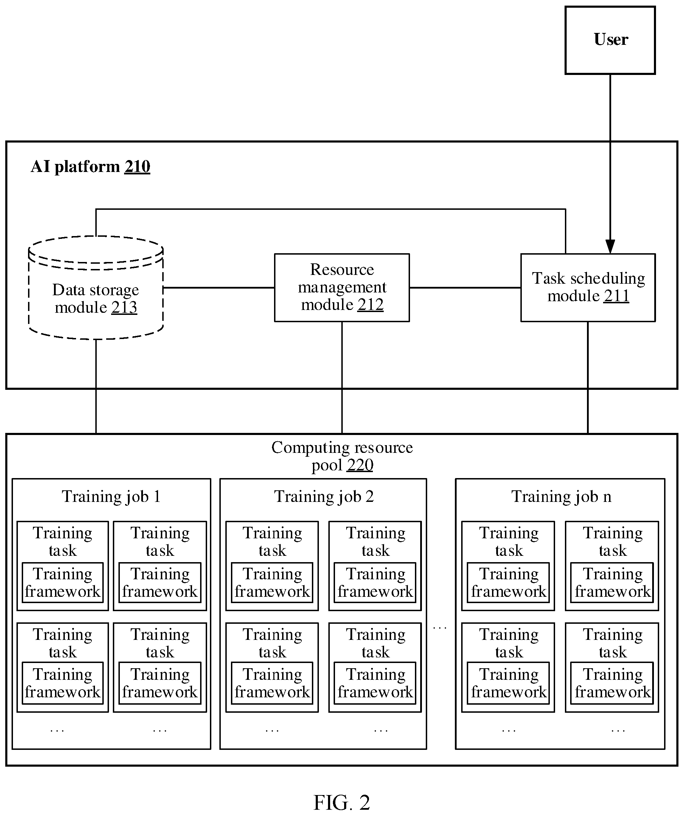

FIG. 2 is a schematic diagram of a structure of an AI platform 210 according to an embodiment of this application. It should be understood that FIG. 2 is merely an example of a schematic diagram of a structure of the AI platform 210. Division into modules in the AI platform 210 is not limited in this application. As shown in FIG. 2, the AI platform 210 includes a task scheduling module 211, a resource management module 212, and a data storage module 213. The AI platform 210 is associated with a computing resource pool 220. The computing resource pool 220 includes a plurality of computing nodes. The AI platform may schedule the computing nodes in the computing resource pool 220 for AI model training.

The following briefly describes functions of the modules in the AI platform 210.

The task scheduling module 211 is configured to: configure and schedule a training job; or receive a training job submitted by a user, manage the training job, and apply for computing resources for running the training job.

It should be understood that how to train one initial AI model, what training data is used for training one initial AI model, and what computing resources are used for training one initial AI model may be set by the user when the user creates a training job corresponding to the initial AI model. If this is not set by the user, this is configured by the task scheduling module 211. How to train one initial AI model includes: a quantity of training tasks into which the training job corresponding to the initial AI model is divided, specific training tasks into which the training job corresponding to the initial AI model is divided, and the like. What training data is used for training one initial AI model includes: how much training data needs to be used by the training job corresponding to the initial AI model, specific training data that needs to be used for the training job corresponding to the initial AI model, how much training data separately needs to be used by each training task in the training job corresponding to the initial AI model, specific training data that separately needs to be used by each training task in the training job corresponding to the initial AI model, and the like. What computing resources are used for training one initial AI model include: a quantity of computing nodes that execute the training job corresponding to the initial AI model, specific specifications of a computing node that executes the training job corresponding to the initial AI model, specific specifications of a computing node that separately executes each training task in the training job corresponding to the initial AI model, and the like.

The resource management module 212 is configured to: manage and schedule the computing resources, and allocate the computing resources to the training job. The resource management module 212 needs to know topology (Topo) information between clusters, where the cluster is a cluster including all the computing resources. When the computing resources are allocated, affinity allocation is performed based on a physical location. An affinity principle means that resources in a same physical location in a same cabinet are preferentially allocated.

The task scheduling module 211 is further configured to configure the training task in the training job to the computing resources allocated by the resource management module 212 for execution. The task scheduling module 211 may divide the training job into one or more training tasks based on a quantity of computing nodes required for one training job. For example, if a specific quantity of computing nodes are needed to execute a training job, the training job is divided into a specific quantity of training tasks, and each training task is then configured on a corresponding computing node for execution.

The data storage module 213 (which, for example, may be a data storage resource corresponding to an OBS provided by a cloud service provider) is configured to store a training framework, a training dataset uploaded by the user, the initial AI model uploaded by the user, an initial AI model uploaded by another user, a completely trained AI model, and the like.

In the computing resource pool 220, one or more training jobs may be simultaneously executed, each training job is used to train one AI model, one AI model is trained based on a same training framework, and the training framework is a running program framework on which each training task in the training job needs to depend. Each training job includes one or more training tasks, and the running program frameworks on which all the training tasks in each training job depend are the same training framework. For example, if executing n training jobs, the computing resource pool 220 is used for training n AI models. For any one of the n training jobs, running program frameworks on which all training tasks need to depend are a same training framework, and the training framework may be obtained from the data storage module 213.

Startup of a training job is described by using one training job as an example. After the task scheduling module 211 receives one training job submitted by the user, the task scheduling module 211 applies to the resource management module 212 for computing resources to execute a plurality of training tasks in the training job. The resource management module 212 allocates a plurality of computing nodes to the training job or the plurality of training tasks, and returns an allocation result to the task scheduling module 211. The task scheduling module 211 sends the training framework, the training dataset, the initial AI model, and the like to the plurality of computing nodes, or the plurality of computing nodes may all obtain the training framework, the training dataset, the initial AI model, and the like from the data storage module 213, to deploy the training framework on each of the plurality of computing nodes. The task scheduling module 211 configures the plurality of training tasks on the plurality of computing nodes respectively, to start the training. In addition, the task scheduling module 211 may further notify each of the plurality of computing nodes of a specific computing node or specific computing nodes that jointly executes or execute the training job with the computing node, so that the computing node knows that training parameter synchronization is performed with the specific computing node or the specific computing nodes. The training parameter synchronization includes gradient synchronization.

The task scheduling module 211 may communicate with the resource management module 212. In this way, the task scheduling module 211 may apply to the resource management module 212 for the computing resources used to execute the training tasks.

The task scheduling module 211 may communicate with the computing resource pool 220. In this way, the task scheduling module 211 may invoke the computing nodes in the computing resource pool 220 to execute the training tasks.

The resource management module 212 may communicate with the computing resource pool 220. In this way, the resource management module 212 may allocate and schedule the computing resources in the computing resource pool 220.

The computing nodes in the computing resource pool 220 may communicate with each other. In this way, the plurality of computing nodes corresponding to a same training job may perform gradient synchronization.

It should be noted that, for one training job, a process of the gradient synchronization described in this application includes the following three possible cases.
(1) Each of the plurality of computing nodes obtains a gradient through calculation, and each computing node sends the gradient obtained through calculation to the AI platform 210; therefore, the AI platform 210 may receive a plurality of gradients, and the AI platform 210 aggregates the plurality of gradients to obtain an aggregated gradient; and the AI platform 210 sends the aggregated gradient back to each computing node, and each computing node updates model parameters based on the aggregated gradient.
(2) Each of the plurality of computing nodes obtains a gradient through calculation, and each computing node sends the gradient obtained through calculation to another computing node; therefore, each computing node may obtain a plurality of gradients, and each computing node aggregates the plurality of gradients to obtain an aggregated gradient; and each computing node updates model parameters based on the aggregated gradient.
(3) Each of the plurality of computing nodes obtains a gradient through calculation, one of the plurality of computing nodes is configured to aggregate gradients, and other computing nodes in the plurality of computing nodes all send the gradients obtained through calculation to the one of the computing nodes; therefore, the one of the computing nodes may obtain the plurality of gradients, and the one of the computing nodes aggregates the plurality of gradients to obtain an aggregated gradient; and the one of the computing nodes sends the aggregated gradient back to another computing node, and each computing node updates model parameters based on the aggregated gradient.

In a possible implementation, the AI platform further includes an algorithm management module 214 (not shown in FIG. 2). The algorithm management module 214 is configured to provide an initial AI model management interface, so that the user uploads an initial AI model created based on a training target of the user, or the user obtains an existing initial AI model from an initial AI model library. Alternatively, the algorithm management module 211 may be further configured to obtain, based on a task target input by the user, an initial AI model built on an AI platform. The initial AI model created by the user based on the training target of the user can be compiled based on the framework provided by the AI platform. The initial AI model may include an AI model that is not trained, and an AI model that is trained but not completely trained. The AI model that is not trained means that the constructed AI model is not trained by using the training dataset, and parameters of the constructed AI model are all preset values.

The task scheduling module 211 may communicate with the algorithm management module 214, and is configured to obtain an access address of the initial AI model from the algorithm management module 214.

In a possible implementation, the AI platform 210 further includes a human-machine interaction module 215 (not shown in FIG. 2), and provides an interaction interface with the user. The human-machine interaction module 215 communicates with the task scheduling module 211, forwards an instruction of the user to the task scheduling module 211, obtains status information of a training process, the completely trained AI model, and the like, and provides the status information and the AI model for the user.

It should be noted that the AI platform in this application may be a system that may interact with the user. The system may be a software system, a hardware system, or a system combining software and hardware. This is not limited in this application.

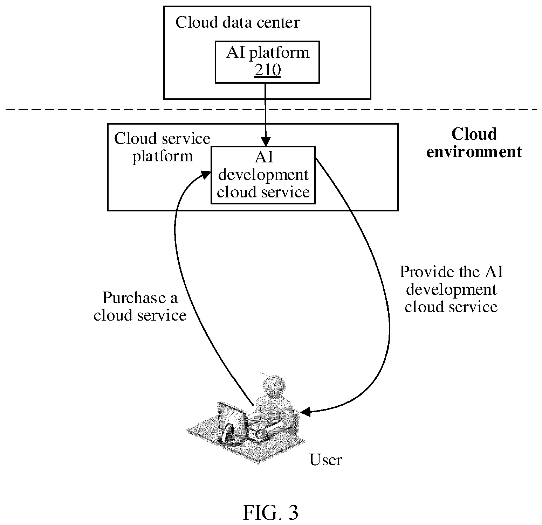

FIG. 3 is a schematic diagram of an application scenario of an AI platform 210 according to an embodiment of this application. As shown in FIG. 3, in an embodiment, the AI platform 210 may be all deployed in a cloud environment. The cloud environment is an entity that uses basic resources to provide cloud services for users in a cloud computing mode. The cloud environment includes a cloud data center and a cloud service platform. The cloud data center includes a large quantity of basic resources (including a computing resource pool, a storage resource, and a network resource) owned by a cloud service provider. The computing resource pool included in the cloud data center may be a large quantity of computing nodes (for example, servers). The AI platform 210 may be independently deployed on a server or a virtual machine in the cloud data center, or the AI platform 210 may be deployed on a plurality of servers in the cloud data center in a distributed manner, or may be deployed on a plurality of virtual machines in the cloud data center in a distributed manner, or may be deployed on servers and virtual machines in the cloud data center in a distributed manner. As shown in FIG. 3, the AI platform 210 is abstracted by the cloud service provider into an AI cloud service on the cloud service platform and provided for the user. After the user purchases the cloud service on the cloud service platform (the user may pre-charge the cloud service and then perform settlement based on a final status of resource usage), the cloud environment provides the AI platform cloud service for the user by using the AI platform 210 deployed in the cloud data center. When using the AI platform cloud service, the user may determine, through an application programming interface (application programming interface, API) or a graphical user interface (graphical user interface, GUI), a task to be completed by an AI model, upload a training dataset to the cloud environment, and the like. The AI platform 210 in the cloud environment receives task information of the user and the training dataset, and performs data preprocessing and AI model training. The AI platform returns, to the user through the API or GUI, content such as status information of a training process of the AI model. A completely trained AI model can be downloaded or used online by the user to complete a specified task.

In another embodiment of this application, when the AI platform in the cloud environment is abstracted as an AI cloud service and provided for the user, the user may purchase use duration of a container with fixed resource usage. When the resource usage is fixed, longer use duration indicates a higher fee, and vice versa. Within the use duration, the AI platform trains the AI model. Alternatively, the user may pre-charge the cloud service, and after the training is complete, perform settlement based on a quantity of finally used GPUs and the use duration.

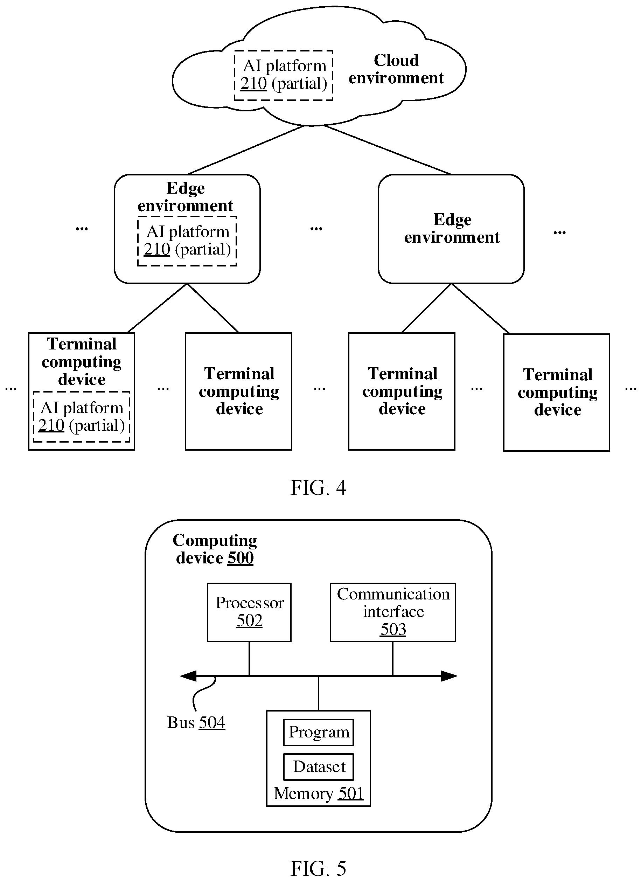

The AI platform 210 provided in this application is relatively flexibly deployed. As shown in FIG. 4, in another embodiment, the AI platform 210 provided in this application may alternatively be deployed in different environments in a distributed manner. The AI platform 210 provided in this application may be logically divided into a plurality of parts, and each part has a different function. For example, in an embodiment, the AI platform 210 includes a task scheduling module 211, a resource management module 212, and a data storage module 213. The parts of the AI platform 210 may be separately deployed in any two or three of the following: a terminal computing device, an edge environment, and a cloud environment. The terminal computing device includes a terminal server, a smartphone, a notebook computer, a tablet computer, a personal desktop computer, an intelligent camera, and the like. The edge environment is an environment that includes a set of edge computing devices that are relatively close to the terminal computing device, and the edge computing device includes: an edge server, an edge station with a calculation capability, and the like. Various parts of the AI platform 210 deployed in different environments or devices cooperate with each other to provide the user with a function such as AI model training.

For example, in a scenario, the task scheduling module 211 in the AI platform 210 is deployed in the terminal computing device, the resource management module 212 in the AI platform 210 is deployed in the edge computing device in the edge environment, and the data storage module 213 in the AI platform 210 is deployed in the cloud computing device in the cloud environment. The user sends a training job to the task scheduling module 211 in the terminal computing device. The terminal computing device applies to the resource management module 212 in the edge computing device for a computing resource. The edge computing device allocates the computing resource to the training job. The terminal computing device configures a training task in the training job on the allocated computing resource for execution. When the training task is executed, required data such as a sample set and an initial AI model is obtained from the data storage module 213 in the cloud computing device.

It should be understood that in this application, a specific environment in which some parts of the AI platform 210 are deployed is not limited. During actual application, adaptive deployment may be performed based on a calculation capability of the terminal computing device, a resource occupation status of the edge environment and the cloud environment, or a specific application requirement.

The AI platform 210 may alternatively be deployed on a computing device in any of the foregoing environments (for example, an edge server in the edge environment). FIG. 5 is a schematic diagram of a hardware structure of a computing device 500 on which an AI platform 210 is deployed. The computing device 500 shown in FIG. 5 includes a memory 501, a processor 502, a communication interface 503, and a bus 504. The memory 501, the processor 502, and the communication interface 503 are communicatively connected to each other through the bus 504.

The memory 501 may be a read-only memory (read-only memory, ROM), a random access memory (random access memory, RAM), a hard disk, a flash memory, or any combination thereof. The memory 501 may store a program. When the program stored in the memory 501 is executed by the processor 502, the processor 502 and the communication interface 503 are configured to execute the AI platform 210 to train an AI model for a user. The memory may further store a training dataset. For example, some storage resources in the memory 501 are grouped into a data storage module 213, configured to store data required by the AI platform 210.

The processor 502 may be a central processing unit (central processing unit, CPU), an application-specific integrated circuit (application-specific integrated circuit, ASIC), a GPU, or any combination thereof. The processor 502 may include one or more chips. The processor 502 may include an AI accelerator, for example, a neural processing unit (neural processing unit, NPU).

The communication interface 503 uses a transceiver module, for example, a transceiver, to implement communication between the computing device 500 and another device or a communication network. For example, data may be obtained through the communication interface 503.

The bus 504 may include a path for transmitting information between components (for example, the memory 501, the processor 502, and the communication interface 503) of the computing device 500.

To facilitate understanding of embodiments of this application, a technical problem to be specifically resolved in this application is further analyzed and provided.

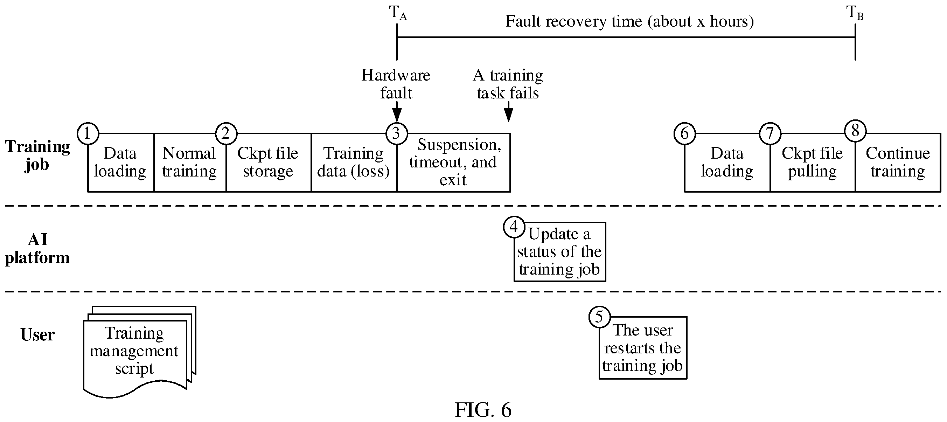

FIG. 6 is a schematic diagram of a processing procedure timeline of a related training job. A processing procedure of the training job is implemented based on the AI platform shown in FIG. 2, and the processing procedure of the training job includes the following steps.
(1) The task scheduling module 211 starts the training job based on a configuration of a user, and applies to the resource management module 212 for computing resources used to execute the training job. The resource management module 212 allocates a plurality of computing nodes to the training job, and the task scheduling module 211 starts training tasks in the training job on the plurality of computing nodes. Each of the plurality of computing nodes performs data loading, and starts to perform training (calculation) after completing the data loading. The data loading refers to preparing data required for training, including obtaining a training framework, a training dataset, an initial AI model, and the like, and deploying the training framework.
(2) In a process of executing the training task, each computing node periodically stores a Ckpt (check point) file in a training script of the training task. The training script is a training program run in the training task. The Ckpt file is a file stored in the process of executing the training task, and is a binary file. The Ckpt file stores all variables such as weights (weights), biases (biases), and gradients (gradients), and is used to restore a training progress after the training task fails.
(3) In the process in which each computing node executes the training task, if a hardware fault or a software fault occurs (for example, the training task is suspended, the training task times out, or the training task exits), the executed training task is abnormal. As a result, the training task fails and exits. It should be understood that, provided that one training task in the training job fails and exits, the entire training job fails and exits, that is, the training job is interrupted.
(4) After the training job is interrupted, the AI platform updates a status of the training job. For example, the AI platform can display an interruption status of the training job to the user.
(5) The user finds on the AI platform that the training job is interrupted, and restarts the training job on the AI platform.
(6) After the user restarts the training job, the AI platform re-applies for computing resources for the training job, that is, the AI platform re-applies for a plurality of computing nodes for the training job, and each computing node that is re-applied for is configured to execute a training task in the training job; and each computing node that is re-applied for performs data loading.
(7) After completing the data loading, each computing node that is re-applied for pulls the Ckpt file. The Ckpt file pulled by each computing node that is re-applied for is a Ckpt file that is stored in the training script of the training task that needs to be executed by the computing node before the fault occurs. It should be understood that the training task that needs to be executed by each computing node that is re-applied for is the training task in the training job.
(8) Each computing node that is re-applied for continues training based on the Ckpt file obtained through pulling, that is, each computing node that is re-applied for executes, based on the Ckpt file obtained through pulling, the training task that needs to be executed by the computing node.

It can be learned from FIG. 6 that the following problems exist in a training process of the AI model.
(1) When a training task is faulty, a training job to which the training task belongs is interrupted, and the training job needs to be manually restarted. The AI platform re-applies for computing resources for the training job, and it takes long time to re-apply for the computing resources and it also takes long time to start the training task on the computing resources that are re-applied for. As a result, it takes long time to recover the fault.
(2) Because the computing resources need to be re-applied for the training job, a scale of the computing resources used to execute the training job increases. However, due to a limitation of a scale of an entire computing resource pool, after the training job is restarted, if the large-scale computing resources need to be re-applied for to execute the training job, there is a possibility that the computing resources fail to be successfully applied for. As a result, the fault cannot recover.
(3) During AI model training, training data is stored in the Ckpt file for fault recovery. Because the Ckpt file is large, it takes long time to obtain the Ckpt file. As a result, it takes long time to recover the fault.
(4) The Ckpt file is large, it takes long time to store the Ckpt file, and the Ckpt file cannot be stored at a high frequency in a training process. Therefore, during the fault recovery, training data from a time point at which the Ckpt file is stored to a time point at which the training task is faulty cannot be restored, that is, the training data from the time point at which the Ckpt file is stored to the time point at which the training task is faulty is lost.

In conclusion, in a conventional technology, after the computing node is faulty, it takes long time to recover the fault or the fault may not be recovered, and a training loss caused by the fault is large.

In view of the problems existing in the conventional technology, this application mainly resolves a problem that it takes long time to recover the fault because the computing node configured to execute the training task is faulty in the training process of the AI model. In the technical solutions provided in this application, a dynamic fault recovery capability is provided, to ensure lossless recovery of the entire training when the training process is faulty. Specifically, in the training process of the AI model, when a computing node configured to perform training is faulty, without interrupting a training job, the faulty computing node is dynamically isolated, and a new computing node acts as supplement to replace the faulty computing node, to ensure that the training process of the AI model is not interrupted, so that duration of completing the training of the AI model is not affected. The new computing node is a computing node that is not configured to perform training during resource application, or the new computing node is a computing node that has been configured to perform training during resource application, but a training task executed by the new computing node and a training task executed by the faulty computing node do not belong to a same training job.

The following describes in detail, with reference to specific implementations, the technical solutions provided in this application.

In this application, functions of the AI platform 210 shown in FIG. 2 are improved, including enhancing capabilities of the task scheduling module 211 and the resource management module 212, so that the task scheduling module 211 has a function such as fault recovery, and the resource management module 212 has functions such as fault isolation and dynamic resource adjustment. Details are provided below.

In a possible implementation, the resource management module 212 in this application is further configured to: perform fault monitoring on any computing node configured to execute a training task; perform fault isolation on a faulty first computing node after monitoring that the computing node is faulty; and report a fault to the task scheduling module 211, that is, notify the task scheduling module 211 that the first computing node is faulty. The first computing node is a type of faulty computing nodes, and may be one or more computing nodes.

In an example, in terms of the fault monitoring, the resource management module 212 in this application is specifically configured to: monitor whether a hardware fault occurs on any computing node configured to execute a training task, and monitor whether a training process on the any computing node exits. If one or more of the following cases are met: the hardware fault occurs on the any computing node, and the training process on the any computing node exits, the any computing node is faulty, that is, the any computing node is the first computing node.

It should be noted that the fault isolation has two meanings. In a first meaning, a training task of a training job is executed by a plurality of computing nodes, and when there is the first computing node in the plurality of computing nodes, the first computing node is removed from the plurality of computing nodes, so that the first computing node is no longer configured to execute the training task of the training job. In a second meaning, when the hardware fault occurs on the first computing node, after fault isolation is performed on the first computing node, and before fault recovery is performed on the first computing node, the first computing node is not configured to execute a training task of any training job.

In a possible implementation, the task scheduling module 211 is further configured to receive the fault reported by the first computing node. In this application, when executing a training task, each computing node also monitors whether a running fault occurs in a training process corresponding to the training task. When monitoring that the running fault occurs in the training process corresponding to the training task, the computing node determines that the computing node is faulty, that is, determines that the computing node is the first computing node, and reports the fault to the task scheduling module 211. From a perspective of software, in this application, when each computing node executes a training task, a monitoring program in the computing node monitors whether a running fault occurs in a training process corresponding to the training task. When monitoring that the running fault occurs in the training process corresponding to the training task, the monitoring program determines that the computing node is faulty, that is, determines that the computing node is the first computing node, and the monitoring program reports the fault to the task scheduling module 211.

In a possible implementation, the resource management module 212 is further configured to: receive the fault reported by the first computing node; and after receiving the fault reported by the first computing node, perform fault isolation on the first computing node, and report the fault to the task scheduling module 211. In this application, when executing a training task and monitoring that a running fault occurs in a training process corresponding to the training task, each computing node determines that the computing node is faulty, that is, determines that the computing node is the first computing node, and reports the fault to the resource management module 212. After receiving the fault reported by the first computing node, the resource management module 212 performs fault isolation on the first computing node, and forwards the fault to the task scheduling module 211. From a perspective of software, in this application, when each computing node executes a training task, a monitoring program in the computing node monitors whether a running fault occurs in a training process corresponding to the training task. When monitoring that the running fault occurs in the training process corresponding to the training task, the monitoring program determines that the computing node is faulty, that is, determines that the computing node is the first computing node, and the monitoring program reports the fault to the resource management module 212.

It should be noted that, that the running fault occurs in the training process does not include that the training process exits from the computing node.

In a possible implementation, the task scheduling module 211 in this application is further configured to: perform fault recovery after the computing node is faulty in a process of executing the training task, that is, perform fault recovery after receiving the fault reported by the resource management module 212 or the first computing node.

In an example, when the resource management module 212 reports the fault to the task scheduling module 211, in terms of the fault recovery, the task scheduling module 211 in this application is specifically configured to: notify a third computing node that is not faulty to suspend execution of a training task, that is, notify the third computing node to suspend a training process, and apply to the resource management module 212 for a second computing node to replace the first computing node. The second computing node is a type of computing nodes configured to replace the first computing node, and may be one or more computing nodes; and the second computing node is configured to execute the training task originally executed by the first computing node. The second computing node may be a computing node that is in the computing resource pool 220 and that is not configured to execute a training task; or the second computing node may be a computing node that is in the computing resource pool 220 and that has been configured to execute a training task, but the training task executed by the second computing node and the training task executed by the first computing node do not belong to a same training job. The third computing node is a type of computing nodes that are not faulty, and may be one or more computing nodes. The third computing node and the first computing node are configured to execute the training task in the same training job.

In another example, when the first computing node reports the fault to the task scheduling module 211, in terms of the fault recovery, the task scheduling module 211 in this application is specifically configured to: notify the resource management module 212 to perform fault isolation on the first computing node, notify a third computing node to suspend execution of a training task, and apply to the resource management module 212 for the second computing node to replace the first computing node.

In a possible implementation, the resource management module 212 in this application is further configured to: after receiving, from the task scheduling module 211, an application for applying for the second computing node, reallocate a computing resource, that is, allocate, from the computing resource pool 220, the second computing node to replace the first computing node; and notify the task scheduling module 211 of a result of the reallocated computing resource after reallocating the computing resource.

In this way, when executing the training task, the resource management module 212 may add the computing node, that is, perform dynamic resource adjustment. For example, if a computing node is faulty when executing a training task or some training tasks, the resource management module 212 may add the second computing node to replace the first computing node to execute the training task or the training tasks.

In a possible implementation, the task scheduling module 211 in this application is further configured to: receive the result of reallocated computing resource from the resource management module 212, and invoke the added second computing node to execute the training task originally executed by the first computing node; and notify the third computing node to continue to execute the training task, that is, notify the third computing node to continue to execute the previously suspended training process.

Because the task scheduling module 211 may communicate with the resource management module 212, the resource management module 212 may report the fault to the task scheduling module 211, and the task scheduling module 211 may notify the resource management module 212 to perform fault isolation on the first computing node.

Because the task scheduling module 211 may communicate with the computing resource pool 220, the task scheduling module 211 may notify the computing node in the computing resource pool 220 to suspend the execution of the training task, continue the execution of the training task, and the like.

Because the resource management module 212 may communicate with the computing resource pool 220, the resource management module 212 may monitor whether the computing node in the computing resource pool 220 is faulty when the computing node executes the training task, perform fault isolation on the first computing node in the computing resource pool 220, and the like.

As described above, distributed training of data parallel includes two phases: a phase of calculation of a plurality of computing nodes and a phase of gradient synchronization. In this way, for a training job of an AI model, the training job is divided into a plurality of training tasks, and the plurality of training tasks are executed by a plurality of computing nodes. In the phase of the calculation of the plurality of computing nodes, each of the plurality of computing nodes independently completes calculation of the computing node to obtain a corresponding gradient; and in the phase of the gradient synchronization, all of the plurality of computing nodes provide the gradients obtained through calculation, to complete gradient synchronization together. The plurality of computing nodes independently complete calculation in this calculation phase, any one of the plurality of computing nodes does not know a specific node or specific nodes with which the computing node needs to perform gradient synchronization, but the plurality of computing nodes execute the training tasks based on a same training framework. Therefore, a communication topology may be disposed in the training framework, and the communication topology is used by the plurality of computing nodes to perform gradient synchronization. The communication topology is a topology structure formed by a plurality of computing nodes that execute one training job, and the communication topology records specific computing nodes that jointly execute the training job and specific computing nodes that participate in the gradient synchronization. The recording of the communication topology may be used for communication between the plurality of computing nodes.

In a possible implementation, a capability of the training framework is further optimized in this application, and fault tolerance processing of the training task is added in the existing training framework. That is, the computing node can be dynamically added or deleted in the communication topology of the training framework in the training process, to ensure high availability of the task.

Specifically, a plurality of training tasks in one training job are executed by a plurality of computing nodes. In a training process, when there is a first computing node in the plurality of computing nodes, the resource management module 212 performs fault isolation on the first computing node, and allocates a second computing node to replace the first computing node. In this case, the communication topology in the training framework needs to be updated. To be specific, the first computing node is deleted and the second computing node is added in the communication topology in the training framework.

In an example, after allocating the second computing node to replace the first computing node, the resource management module 212 notifies the task scheduling module 211. The task scheduling module 211 notifies a third computing node in the plurality of computing nodes of information about the second computing node, and the third computing node deletes the first computing node and adds the second computing node in a communication topology in a training framework. The task scheduling module 211 sends the training framework, the training dataset, the initial AI model, and the like to the second computing node, or the second computing node may obtain the training framework, the training dataset, the initial AI model, and the like from the data storage module 213. The task scheduling module 211 further sends information about the third computing node to the second computing node, and the second computing node may deploy a training framework and construct a communication topology in the deployed training framework based on the information about the second computing node and the information about the third computing node. After the second computing node deploys the training framework, the task scheduling module 211 may further configure the second computing node to start a training task originally executed by the first computing node.

It should be understood that after each of the third computing node and the second computing node update the communication topology in the training framework, and the second computing node constructs the communication topology in the deployed training framework based on the information about the second computing node and the information about the third computing node, the communication topology in the training framework on the third computing node is the same as that on the second computing node, so that the third computing node and the second computing node may perform gradient synchronization. Because the second computing node has not performed the training task originally performed by the first computing node, there is no corresponding training parameters. Consequently, the second computing node does not provide the training parameters during the current gradient synchronization.

Based on the functions of the foregoing modules, in the AI platform 210 provided in this embodiment of this application, when the fault occurs during training, the faulty first computing node is dynamically isolated, the second computing node acts as supplement, and the second computing node replaces the faulty first computing node to perform training, to ensure that the training process is not interrupted, so that overall training duration is not affected, and fault recovery duration is reduced.

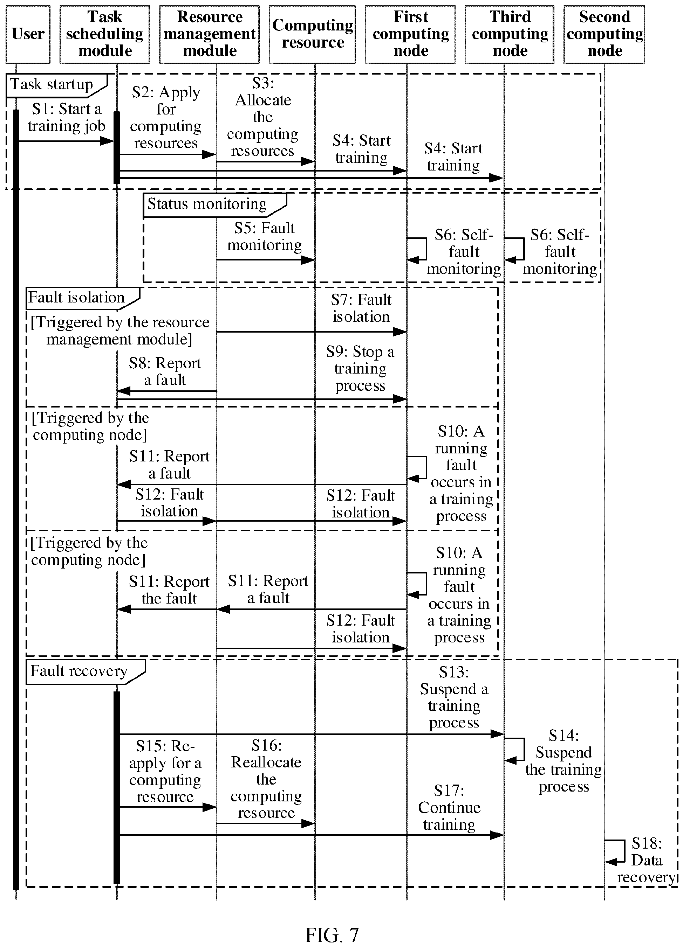

FIG. 7 is a schematic flowchart of a distributed training method for an AI model according to an embodiment of this application. The distributed training method for an AI model shown in FIG. 7 may be implemented based on the AI platform 210 shown in FIG. 2. A task scheduling module and a resource management module in FIG. 7 may be the task scheduling module 211 and the resource management module 212 in FIG. 2 respectively, and computing resources in FIG. 7 may be the computing resource pool 220 or the computing resources in the computing resource pool 220.

The following describes, by using an example in which the AI platform 210 performs distributed training on an initial AI model to obtain a completely trained AI model, the distributed training method for an AI model provided in this application. The distributed training of the initial AI model corresponds to one training job, and the computing resources required for the distributed training of the initial AI model are a plurality of computing nodes. The training job may be divided into a plurality of training tasks, the plurality of training tasks use a same training framework, and the plurality of computing nodes are in a one-to-one correspondence with the plurality of training tasks. Each of the plurality of computing nodes executes a corresponding training task, that is, each of the plurality of computing nodes runs one training process for the corresponding training task, so that there are a plurality of training processes, and the plurality of training tasks are in a one-to-one correspondence with the plurality of training processes. In addition, each of the plurality of computing nodes may execute only one training task, that is, there is only one training process on each computing node, and there is only one training framework on each computing node.

As shown in FIG. 7, the computing resources in FIG. 7 may be all or some of the plurality of computing nodes, and each of the plurality of computing nodes is configured to execute one of the plurality of training tasks. A first computing node in FIG. 7 may be any faulty computing node in the plurality of computing nodes; a third computing node in FIG. 7 may be any computing node that is not faulty in the plurality of computing nodes; and a second computing node in FIG. 7 may be any computing node configured to replace any first computing node, and the second computing node is configured to execute a training task originally executed by the first computing node. A procedure of the distributed training method for an AI model includes four phases: task startup, status monitoring, fault isolation, and fault recovery. The following describes the phases in detail.

In the first phase, task startup is described.

Step S 1: A user starts a training job.

Specifically, the user creates and submits, by using a human-machine interaction module 215, the training job used to train the initial AI model. The human-machine interaction module 215 generates an instruction of the user based on the training job submitted by the user, and forwards the instruction of the user to the task scheduling module 211. The task scheduling module 211 receives the training job submitted by the user, so that the user starts the training job.

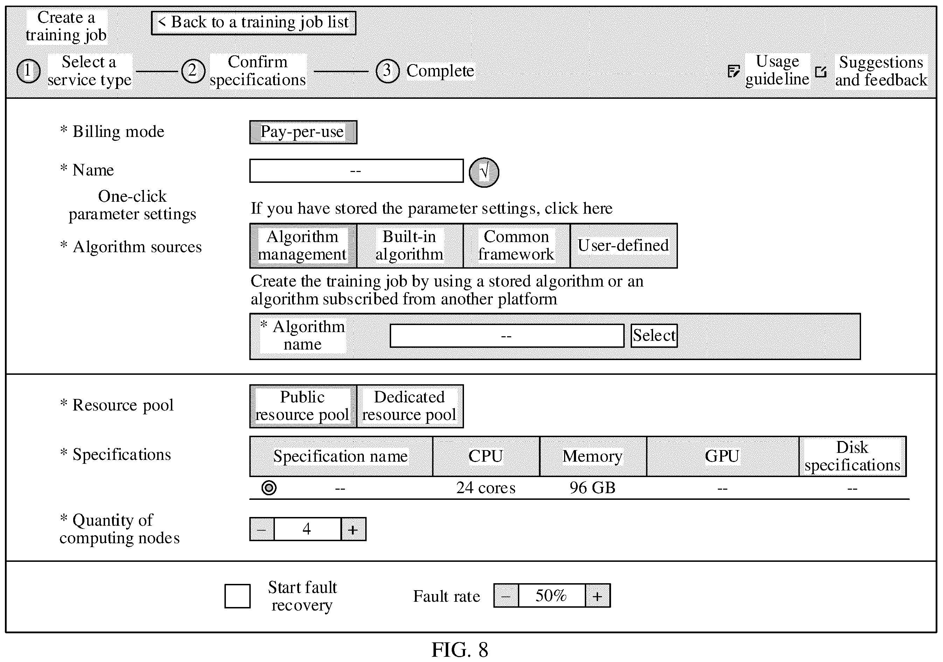

FIG. 8 is a schematic diagram of a user interaction interface according to an embodiment of this application. The interface shown in FIG. 8 is an interface for creating a training job presented in the human-machine interaction module 215. The creation of the training job includes three steps: selection of a service type, confirmation of specifications, and completion. When a user selects the service type, the AI platform 210 in this application may provide a training service of an AI model for a user based on a pay-per-use billing mode. When the training job is created, a name of the training job and one-click parameter settings may be set. An algorithm used for training may be obtained as required based on different sources. For example, a used algorithm, a built-in algorithm, a common framework (namely, a common training framework), or a user-defined algorithm is selected. The algorithm may be selected based on a name of the algorithm. The computing resource pool 220 is divided into a public resource pool and a dedicated resource pool. The user may select a corresponding computing resource pool for training based on a requirement. Both the public resource pool and the dedicated resource pool may include computing resources of different specifications, and the user may select, based on a scale of required computing resources, proper computing resources from the computing resources of the different specifications for training. When the computing resources are selected, a quantity of computing nodes may be set based on a training requirement. After completing the selection of the service type, the user confirms the specifications. After completing the confirmation of the specifications, the user completes the creation of the training job.

It should be understood that after receiving the training job submitted by the user, the task scheduling module 211 knows that the user starts execution of the training job, to apply for computing resources to execute the training job, that is, to perform step S2.

Step S2: The task scheduling module applies to the resource management module for the computing resources.

Specifically, when creating the training job, the user sets the quantity of computing nodes configured to execute the training job, specifications of the computing nodes, and the like. Therefore, the task scheduling module 211 applies to the resource management module 212 for the computing resources based on settings of the user. For example, if the user sets a specific quantity of computing nodes that need to execute the training job, the task scheduling module 211 applies to the resource management module 212 for the specific quantity of computing nodes; and if the user sets specific specifications of computing nodes configured to execute the training job, the task scheduling module 211 applies to the resource management module 212 for the specific specifications of the computing nodes.

Step S3: The resource management module allocates the computing resources.

Specifically, after receiving, from the task scheduling module 211, an application for applying for the computing resources, the resource management module 212 allocates a plurality of computing nodes from the computing resource pool 220 to the training job based on the application for applying for the computing resources, and specifications of the plurality of allocated computing nodes are the specifications of the computing nodes applied for by the task scheduling module 211.

In addition, the resource management module 212 returns a result of the allocated computing resources to the task scheduling module 211. Therefore, the task scheduling module 211 may know which computing nodes are the computing resources allocated by the resource management module 212 to the training job. Optionally, the result of the allocated computing resources includes: names of the computing nodes, identifiers of the computing nodes, specifications of the computing nodes, and the like.

Step S4: The task scheduling module starts the training.

Specifically, the task scheduling module 211 divides the training job into a plurality of training tasks based on the quantity of computing nodes that is set by the user during the creation of the training job, where a quantity of training tasks in the plurality of training tasks is equal to the set quantity of computing nodes, each training task in the training job is a training task for distributed training of an initial AI model, and each training task in the training job is used to perform multi-round iterative training on the initial AI model. The task scheduling module 211 determines, from the plurality of computing nodes, a computing node configured to execute each training task, and configures each training task to be executed on the computing node determined for the training task. Therefore, the plurality of training tasks are in a one-to-one correspondence with the plurality of computing nodes. It should be understood that one training task runs on one computing node, so that each of the plurality of computing nodes runs one training process for one training task in the training job for training. Therefore, the plurality of training tasks are in a one-to-one correspondence with a plurality of training processes.

When determining, from the plurality of computing nodes, the computing node configured to execute each training task, the task scheduling module 211 may match, from the plurality of computing nodes based on a specification of the computing node required for each training task, the proper computing node to execute each training task. When configuring the training task to be executed on the determined computing node, the task scheduling module 211 may precisely configure, based on a name of the computing node, an identifier of the computing node, or the like, the training task to be executed on the corresponding computing node.

As shown in FIG. 8, when creating the training job, if the user sets four computing nodes, the task scheduling module 211 divides the training job into four training tasks, applies to the resource management module 212 for four computing nodes to execute the training job, and configures the four training tasks to be executed on the four computing nodes respectively.

In the second phase, status monitoring is performed.

In this application, for each of the plurality of computing nodes configured to execute the training job, when the computing node executes the training task, the AI platform 210 provides a status monitoring capability, and the AI platform 210 periodically performs status monitoring on the computing node. The status monitoring includes fault monitoring performed by the resource management module 212 on the computing node and self-fault monitoring performed by the computing node. Details are provided as follows.

Step S5: The resource management module performs fault monitoring on the computing resource.

The resource management module 212 performs fault monitoring on the computing resource, that is, the resource management module 212 performs fault monitoring on the computing node. Specifically, the resource management module 212 periodically performs fault monitoring on each of the plurality of computing nodes, to determine whether a fault occurs when each of the plurality of computing nodes executes the training task. That the resource management module 212 performs fault monitoring on the computing node includes: monitoring whether a hardware fault occurs on the computing node and/or monitoring whether a training process on the computing node exits; and when monitoring that the hardware fault occurs on the computing node and/or monitoring that the training process on the computing node exits, determining that the computing node is faulty.

It should be noted that the hardware fault in this application may include a first type of hardware fault and a second type of hardware fault. For the first type of hardware fault, the training process on the computing node exits or stops. For example, a power failure occurs on the computing node, or a network between the computing node and another computing node that is used with the computing node to jointly execute the same training job is disconnected. For the second type of hardware fault, the training process on the computing node does not exit or stop, and only calculation performance of the computing node is affected. For example, calculation of the computing node is very slow and the training process on the computing node does not exit. In addition, that a hardware fault occurs on the computing node is only one possibility that the training process on the computing node exits. A reason why the training process on the computing node exits is not specifically limited in this application. When the training process on the computing node exits due to any reason, the resource management module 212 may monitor the reason.

Step S6: Each computing node performs self-fault monitoring.

Specifically, when executing the training task, each of the plurality of computing nodes monitors whether a running fault occurs in the training process corresponding to the training task. From a perspective of software, when each computing node in this application executes the training task, a monitoring program in the computing node monitors whether the running fault occurs in the training process corresponding to the training task.

It should be understood that there is no sequence of execution time between step S5 and step S6. In addition, when step S5 is performed, step S6 is optional, and when step S6 is performed, step S5 is optional.

In the third phase, fault isolation is performed.

It can be learned from the phase of the status monitoring, in this application, the resource management module 212 performs fault monitoring on the computing resource (that is, the computing node) and/or the computing node performs self-fault monitoring, and it may be considered that the computing node is faulty when the fault is monitored in either of two monitoring manners. If the computing node is faulty, the training task executed by the computing node is faulty. If the training task is faulty, the training job is faulty. If the training job is faulty, the distributed training of the initial AI model is faulty. To ensure that the distributed training of the initial AI model can be performed smoothly, once it is monitored that the fault occurs, fault isolation needs to be performed on the faulty first computing node. Because there are the two monitoring manners of monitoring the fault, there are also two triggering manners of triggering the fault isolation. Details are separately provided below.

Manner 1: The resource management module triggers the fault isolation. The following steps S7 to S9 are steps of triggering the fault isolation by the resource management module.

Step S7: The resource management module performs fault isolation on the first computing node.

Specifically, when monitoring that the first computing node in the plurality of computing nodes is faulty, the resource management module 212 performs fault isolation on the first computing node, so that the first computing node is no longer configured to execute the training task in the training job; and when the hardware fault occurs on the first computing node, the first computing node is not invoked again before the fault is recovered. The fault monitored by the resource management module 212 includes that the hardware fault occurs on the computing node and/or the training process on the computing node exits.

Step S8: The resource management module reports the fault to the task scheduling module.

Specifically, the resource management module 212 reports the monitored fault to the task scheduling module 211, for example, reports, to the task scheduling module 211, information indicating that the hardware fault occurs on the first computing node or the training process on the first computing node exits, and the task scheduling module 211 processes the training process on the first computing node.

Step S9: The task scheduling module sends a training process stopping notification to the first computing node.

It should be understood that step S9 is optional. When the resource management module 212 monitors that the first type of hardware fault occurs on the first computing node or monitors that the training process on the first computing node exits, the training process on the first computing node automatically stops, and step S9 is not performed. When the resource management module 212 monitors that the second type of hardware fault occurs on the first computing node, the training process on the first computing node does not stop, and step S9 needs to be performed.

Specifically, the task scheduling module 211 sends a training process stopping notification to the first computing node on which the second type of hardware fault occurs, where the training process stopping notification is used to stop a training process on the first computing node on which the second type of hardware fault occurs.

Manner 2: The computing node triggers the fault isolation. The following step S10 to step S12 are steps of triggering the fault isolation by the computing node.

Step S10: The first computing node monitors that the running fault occurs in the training process.

Specifically, when monitoring that the running fault occurs in the training process on each of the plurality of computing nodes, the computing node determines that the computing node is faulty, that is, determines that the computing node is the first computing node. From the perspective of the software, when monitoring that the running fault occurs in the training process on the computing node, the monitoring program in each of the plurality of computing nodes determines that the computing node is faulty, that is, determines that the computing node is the first computing node. The running fault occurs in the training process on the computing node, that is, the running fault occurs in the training task corresponding to the training process.

Step S11: The first computing node reports the fault to the task scheduling module.

Specifically, when the running fault occurs in the training process on the first computing node, the first computing node reports the fault to the task scheduling module. From the perspective of the software, the monitoring program in the first computing node reports the fault to the task scheduling module 211.

Step S12: The task scheduling module sends, to the resource management module, a notification of performing fault isolation on the first computing node, and the resource management module performs fault isolation on the first computing node.

That is, the task scheduling module 211 first sends, to the resource management module 212, the notification of performing fault isolation on the first computing node, and after the resource management module 212 receives, from the task scheduling module 211, the notification of performing fault isolation on the first computing node, the resource management module performs fault isolation on the first computing node.

In step S11 and step S12, the first computing node first reports the fault to the task scheduling module 211, and the resource management module 212 then performs fault isolation. Optionally, alternatively, the first computing node may first report the fault to the resource management module 212, and then, the resource management module 212 reports the fault to the task scheduling module 211 and the resource management module 212 performs fault isolation on the first computing node. It should be noted that in this case, that the resource management module 212 may report the fault to the task scheduling module 211 and that the resource management module 212 may perform fault isolation on the first computing node may be performed in sequence or simultaneously.

In a possible implementation, S 11: The first computing node reports the fault to the resource management module, and the resource management module reports the fault to the task scheduling module. S12: The resource management module performs fault isolation on the first computing node.

In the fourth phase, fault recovery is performed.

It should be noted that the phase of the fault recovery is optional. As shown in FIG. 8, there is an optional configuration item of "Start fault recovery" in the interface for creating the training job provided in this application. For the training job jointly executed by the plurality of computing nodes, when the user selects the configuration item of "Start fault recovery" during the creation of the training job, if there is the faulty first computing node in the plurality of computing nodes, step S13 to step S18 are performed; otherwise, step S13 to step S 18 are not performed. In addition, when there is a configuration item of "Fault rate" in the interface for creating the training job provided in this application, and the user selects the configuration item of "Start fault recovery", the user may further set a fault rate threshold. For the training job jointly executed by the plurality of computing nodes, if a ratio of a quantity of faulty first computing nodes in the plurality of computing nodes to the quantity of computing nodes in the plurality of computing nodes exceeds the fault rate threshold, step S13 to step S18 are not performed; otherwise, step S13 to step S18 are performed. For example, when creating a training job, the user sets that the training job is executed by four computing nodes, and sets the fault rate threshold to 50%. If a quantity of first computing nodes in the four computing nodes exceeds 2, fault recovery is not performed; otherwise, fault recovery is performed.

In this application, when a hardware fault occurs on a computing node or a training process on a computing node exits, the computing node is faulty. In this case, the resource management module 212 monitors that the computing node is faulty and reports the fault to the task scheduling module 211, and the task scheduling module 211 determines a training task affected by the faulty computing node.

In this application, when a computing node monitors that a running fault occurs in a training process on the computing node, the computing node is faulty. In this case, the computing node directly reports the fault to the task scheduling module 211, or the computing node indirectly reports the fault to the task scheduling module 211 (the computing node first reports the fault to the resource management module 212, and the resource management module 212 then reports the fault to the task scheduling module 211), and when the fault is reported, directly notifies the task scheduling module 211 of which training process or training processes has or have the running fault, that is, also notifies the task scheduling module 211 of which training task or training tasks has or have the running fault.

In conclusion, when the resource management module 212 monitors that the computing node is faulty, and reports the fault to the task scheduling module 211, the task scheduling module 211 determines that the training task executed on the computing node is faulty. When the computing node monitors that the running fault occurs in the training process, and directly or indirectly reports the fault to the task scheduling module 211, the task scheduling module 211 receives that training task executed on the computing node is faulty.

The task scheduling module 211 triggers a fault recovery operation after determining that the training task executed on the computing node is faulty or receiving that the training task executed on the computing node is faulty. The following describes the phase of the fault recovery in detail.

Step S13: The task scheduling module sends a training process suspension notification to a third computing node that is not faulty.

In a process of distributed training of data parallel, calculation of the plurality of computing nodes and gradient synchronization are alternately performed. In a training process of the initial AI model, when there is the first computing node in the plurality of computing nodes, the first computing node cannot participate in the gradient synchronization. In this way, because the first computing node is missing, a problem may occur in the gradient synchronization. Therefore, in a process of the fault recovery, the third computing node that is not faulty in the plurality of computing nodes needs to be notified to suspend training.

Specifically, if the fault occurs in the training task in the training job, the fault occurs in the training job. Therefore, the task scheduling module 211 sends the training process suspension notification to the third computing node in the plurality of computing nodes, and the training process suspension notification is used to suspend a training process on the third computing node. A training task corresponding to the suspended training process is the training task in the faulty training job.

Step S14: After receiving the training process suspension notification from the task scheduling module, the third computing node suspends the training process.

Specifically, after receiving the training process suspension notification, the third computing node suspends the training process on the third computing node, and waits to receive a training continuing notification, to continue to execute the suspended training process.

In a possible implementation, after receiving the training process suspension notification, the third computing node continues to complete calculation of the training process, and suspends the training process after obtaining a gradient corresponding to the training process.

Specifically, after completing the calculation of the training process and obtaining the gradient corresponding to the training process, the third computing node should enter gradient synchronization. However, because receiving the training process suspension notification, the third computing node suspends the gradient synchronization and starts cyclic waiting (without timeout and exit) until receiving the training continuing notification.

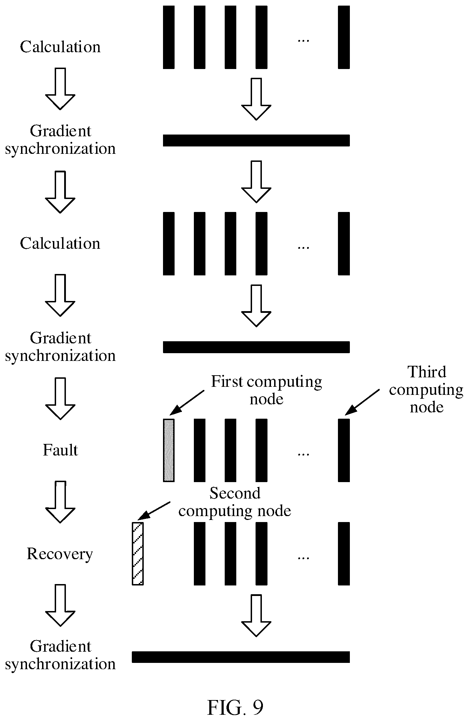

FIG. 9 is a schematic diagram of gradient synchronization according to an embodiment of this application. As shown in FIG. 9, when there is no fault in distributed training, a plurality of computing nodes complete respective calculation, and the plurality of computing nodes then perform gradient synchronization. When a fault occurs, for example, a first computing node in a plurality of computing nodes is faulty, the first computing node is removed (that is, the resource management module 212 performs fault isolation on the first computing node), so that the first computing node is no longer configured to perform current training, and a third computing node in the plurality of computing nodes suspends performing current training after completing calculation, that is, suspends the gradient synchronization.

In a possible implementation, after suspending a training process, the third computing node enters cyclic waiting. In this application, maximum waiting duration may be set. If duration of the cyclic waiting of the third computing node exceeds the maximum waiting duration, the third computing node exits the cyclic waiting, the training fails, and an operation and maintenance engineer performs rectification, to avoid infinite suspension and improve program robustness.

Step S15: The task scheduling module re-applies to the resource management module for a computing resource.

Specifically, the task scheduling module 211 applies to the resource management module 212 for a second computing node to replace the first computing node in the plurality of computing nodes, so that training continues to be performed based on the second computing node and the third computing node in the plurality of computing nodes. The second computing node is a computing node other than the plurality of computing nodes. When applying to the resource management module 212 for the second computing node, the task scheduling module 211 performs application based on a specification of the first computing node. For example, a specification of the applied second computing node is the same as or equivalent to that of the first computing node.

Step S16: The resource management module reallocates the computing resource.

Specifically, after receiving, from the task scheduling module 211, an application for applying for the second computing node, the resource management module 212 reallocates the second computing node from the computing resource pool 220, and returns a result of the reallocated computing resource to the task scheduling module 211. There are two possible cases of the result of the reallocated computing resource. Details are separately provided as follows.

In a first case, the result of the reallocated computing resource is the second computing node that has been allocated. The result of the reallocated computing resource may further optionally include: a name of the second computing node, an identifier of the second computing node, a specification of the second computing node, and the like. In this possible case, the task scheduling module 211 configures the faulty training task on the second computing node for execution, so that the second computing node is used to replace the first computing node.

In a second case, the result of the reallocated computing resource is the second computing node that is not allocated. In this possible case, there is no computing resource available for reallocation because the computing resource pool 220 is limited. When this possible case occurs, training may continue based on the third computing node and a configuration before the fault occurs.

Step S 17: The task scheduling module sends a training continuing notification to the third computing node.

Specifically, the task scheduling module 211 sends the training continuing notification to the third computing node, where the training continuing notification is used by the third computing node to update a communication topology in a training framework on the third computing node, and to continue to execute a training process after the communication topology in the training framework is updated. The training continuing notification needs to notify that the training process that continues to be executed is the previously suspended training process.

It should be noted that the training framework in which the communication topology needs to be updated on the third computing node is a training framework corresponding to a faulty training job, that is, the training framework in which the communication topology needs to be updated is a training framework for training an initial AI model in which a fault occurs.

Because the result that is of the reallocated computing resource and that is returned by the resource management module 212 to the task scheduling module 211 has two possible cases in which the second computing node has been allocated and the second computing node is not allocated, content and a purpose included in the training continuing notification sent by the task scheduling module 211 to the third computing node also have two possible cases, and are separately described as follows.

In a first case, if the result of the reallocated computing resource is the second computing node that has been allocated, the training continuing notification may include information about the second computing node (for example, the name of the second computing node, the identifier of the second computing node, and the specification of the second computing node). The training continuing notification is used by the third computing node to delete the first computing node and add the second computing node in the communication topology in the training framework, and to continue to execute the training process after the communication topology in the training framework is updated. The training framework in which the communication topology is updated is the training framework corresponding to the faulty training job, that is, the training framework for training the initial AI model in which the fault occurs. In this case, step S18 is performed, and the training then continues based on the third computing node and the second computing node.

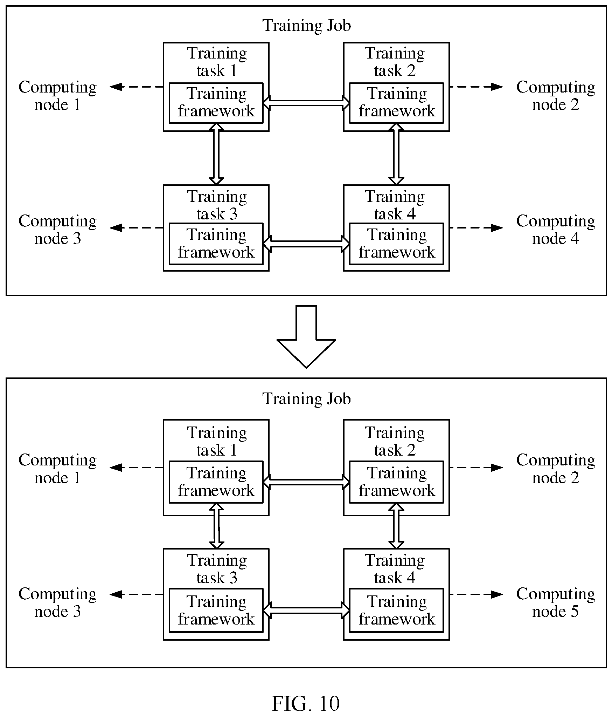

FIG. 10 is a schematic diagram of updating a communication topology in a training framework according to an embodiment of this application. As shown in FIG. 10, a training job is divided into four training tasks (a training task 1, a training task 2, a training task 3, and a training task 4 respectively), so that the training job is executed by four computing nodes (a computing node 1, a computing node 2, a computing node 3, and a computing node 4 respectively). Before a fault occurs, communication topologies in training frameworks of the computing node 1, the computing node 2, the computing node 3, and the computing node 4 are all a communication network formed by the computing node 1, the computing node 2, the computing node 3, and the computing node 4. If the computing node 1, the computing node 2, and the computing node 3 are not faulty, the computing node 1, the computing node 2, and the computing node 3 are third computing nodes; if the computing node 4 is faulty, the computing node 4 is a first computing node; if a computing node 5 is reallocated to replace the computing node 4, the computing node 5 is a second computing node; and the computing node 1, the computing node 2, and the computing node 3 all delete the computing node 4 and add the computing node 5 in the communication topologies in the training frameworks, and the communication network is updated to a communication network formed by the computing node 1, the computing node 2, the computing node 3, and the computing node 5. In this way, the computing node 1, the computing node 2, the computing node 3, and the computing node 5 may continue training, that is, the training job is subsequently executed by the computing node 1, the computing node 2, the computing node 3, and the computing node 5.

In a second case, if the result of the reallocated computing resource is the second computing node that is not allocated, the training continuing notification does not include information about the second computing node. The training continuing notification is used by the third computing node to delete the first computing node in the communication topology in the training framework, and to continue to execute the training process after the communication topology in the training framework is updated. The training framework in which the communication topology is updated is the training framework corresponding to the faulty training job, that is, the training framework for training the initial AI model in which the fault occurs. In this case, step S18 is not performed, and the training then continues based on the third computing node.

It should be noted that, in the second case, after the first computing node is faulty, the first computing node is removed, and the training continues only based on the third computing node. Because a batch size (Batch Size) trained by each computing node does not change, in a fault occurrence process, training time of each third computing node does not change, and consequently overall training time does not change. For the entire training job, if a batch size (Batch Size) in each round of training of each training task does not change, n/m of samples are not trained in each round of training, where n is a quantity of faulty first computing nodes, and m is a total quantity of computing nodes configured to execute the training job. In other words, the training job corresponds to a total of m computing nodes, samples in each round of training are divided into 1/m of samples, each computing node uses the 1/m of samples for training each time, and there are n faulty first computing nodes. Therefore, if the n computing nodes cannot continue training, the n/m of samples are not trained in each round of training.

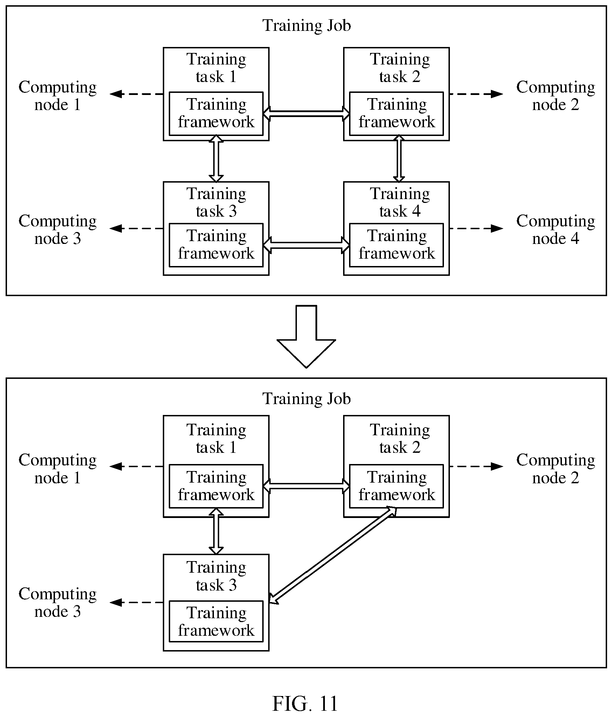

FIG. 11 is another schematic diagram of updating a communication topology in a training framework according to an embodiment of this application. As shown in FIG. 11, a training job is divided into four training tasks (a training task 1, a training task 2, a training task 3, and a training task 4), so that the training job is executed by four computing nodes (a computing node 1, a computing node 2, a computing node 3, and a computing node 4). Before a fault occurs, communication topologies in training frameworks of the computing node 1, the computing node 2, the computing node 3, and the computing node 4 are all a communication network formed by the computing node 1, the computing node 2, the computing node 3, and the computing node 4. If the computing node 1, the computing node 2, and the computing node 3 are not faulty, the computing node 1, the computing node 2, and the computing node 3 are third computing nodes; if the computing node 4 is faulty, the computing node 4 is a first computing node; and the computing node 1, the computing node 2, and the computing node 3 all delete the computing node 4 in the communication topologies in the training frameworks, and the communication network is updated to a communication network formed by the computing node 1, the computing node 2, and the computing node 3. In this way, the computing node 1, the computing node 2, and the computing node 3 may continue training. That is, the subsequent training job is executed by only three computing nodes, and 1/4 of samples are not trained in each round of training.

Step S18: The second computing node performs data recovery.

Specifically, the task scheduling module 211 sends a training framework, a training dataset, an initial AI model, and the like to the second computing node, or the second computing node may obtain a training framework, a training dataset, an initial AI model, and the like from the data storage module 213, so that the second computing node may deploy a training framework and train the initial AI model by using training data in the training dataset. The task scheduling module 211 further sends information about the third computing node (for example, a name of the third computing node, an identifier of the third computing node, and a specification of the third computing node) to the second computing node, and the second computing node may deploy the training framework and construct a communication topology in the deployed training framework based on information about the second computing node and the information about the third computing node. The task scheduling module 211 configures, on the second computing node, a training task that is originally executed by the first computing node for execution, that is, the second computing node runs a training process for the training task that is originally executed by the first computing node.

It should be understood that after the third computing node updates the communication topology in the training framework, and the second computing node constructs the communication topology in the training framework, the communication topology in the training framework on the third computing node is the same as that on the second computing node, so that the third computing node and the second computing node may perform gradient synchronization.

When participating in the gradient synchronization, the second computing node is started by loading a Ckpt file stored before the first computing node is faulty. The Ckpt file is stored for a faulty training task, so that the second computing node can restore data of the first computing node before the first computing node is faulty.

As shown in FIG. 9, after the third computing node updates the communication topology in the training framework, and the second computing node completes the construction of the communication topology and data restoration in the training framework, the second computing node and the third computing node perform gradient synchronization. After the second computing node and the third computing node complete one time of the gradient synchronization, model parameters in AI models trained by the second computing node and the third computing node are the same, so that a next round of AI model training can be performed based on the second computing node and the third computing node.

It should be understood that the distributed training method for an AI model shown in FIG. 7 is described by using an example in which one initial AI model is trained, one training job is performed, each computing node executes only one training task, each computing node has only one training process, and each computing node has only one training framework.

It should be noted that the AI platform 210 may simultaneously train a plurality of initial AI models. When the AI platform 210 simultaneously trains the plurality of initial AI models, the plurality of initial AI models correspond to a plurality of training jobs. In this case, if each computing node executes one or more training tasks (each of a plurality of training tasks belongs to one of the plurality of training jobs), there are one or more training processes and one or more training frameworks on each computing node. When the plurality of initial AI models are trained, training steps are the same as the process described in FIG. 7. For the specific steps, refer to the descriptions in FIG. 7. However, the following steps need to be further described.

Step S2 and step S3: For the plurality of training jobs, used computing resources may overlap or may not overlap; and when overlapping exists, the overlapping computing node is configured to execute a plurality of training tasks, and the plurality of training tasks belong to different training jobs.

Step S5: If each computing node is configured to execute one or more training tasks (each of the plurality of training tasks belongs to one of the plurality of training jobs), there are one or more training processes on each computing node; when it is monitored that a hardware fault occurs on the first computing node, one or more training processes on the first computing node are all affected by the faulty first computing node; and when it is monitored that the training process on the first computing node exits, the training process that exits on the first computing node is affected, but a training process that does not exit on the first computing node continues to normally run.

Step S6: Each computing node monitors whether a running fault occurs in one or more training processes on the computing node, that is, each computing node monitors whether a running fault occurs in each training process on the computing node.

Step S7: If the first computing node may execute one or more training tasks (each of the plurality of training tasks belongs to one of the plurality of training jobs), there may be one or more training processes on the first computing node. When it is monitored that the hardware fault occurs on the first computing node, the first computing node is the faulty computing node. After fault isolation is performed on the first computing node, the first computing node is no longer configured to execute the one or more training tasks. When it is monitored that at least one training process on the first computing node exits, the first computing node is the faulty computing node. That is, it indicates that the first computing node is faulty provided that a training process exits on the first computing node. After fault isolation is performed on the first computing node, the first computing node is no longer configured to execute only a training task corresponding to the exited training process, but continues to normally run a training process that does not exit on the first computing node. In addition, fault recovery needs to be performed only on the training task corresponding to the training process that exits, and fault recovery does not need to be performed on a training task corresponding to the training process that does not exit.

Step S9: When the first type of hardware fault occurs on the first computing node, the one or more training processes on the first computing node are all affected, and the training process stopping notification is optionally used to stop the one or more training processes on the first computing node. Therefore, fault recovery is subsequently optionally performed on a training task corresponding to the one or more training processes.

Step S10: If monitoring that a running fault occurs in any one of the one or more training processes, the first computing node is the faulty computing node. That is, it indicates that the first computing node is faulty provided that a running fault occurs in a training process on the first computing node.

Step S11: When reporting the fault, the first computing node reports only the fault for the training process in which the running fault occurs, and do not report the fault for the training process in which no running fault occurs. That is, the first computing node requests the AI platform to perform fault recovery only on the training task corresponding to the training process in which the running fault occurs, and the AI platform does not need to perform fault recovery on the training task corresponding to the training process that normally runs.

Step S12: After fault isolation is performed on the first computing node, the first computing node is no longer configured to execute only the training task corresponding to the training process in which the running fault occurs, but the first computing node continues to execute the training task corresponding to the training process in which no running fault occurs, that is, the training process in which no running fault occurs on the first computing node continues to normally run.

Step S13 and step 14: If the third computing node may be configured to execute one or more training tasks (each of the plurality of training tasks belongs to one of the plurality of training jobs), there may be one or more training processes on the third computing node. A training process that needs to be suspended on the third computing node is the training process corresponding to the training task in the faulty training job.

Step S15 and step 16: Because the first computing node may be configured to execute one or more training tasks, for one first computing node, one or more second computing nodes may be supplemented. For example, a second computing node acts as supplement to replace a first computing node to execute the one or more training tasks. Alternatively, a plurality of second computing nodes are supplemented to replace one first computing node to execute the one or more training tasks, and each of the plurality of second computing nodes executes at least one of the plurality of training tasks.

Step S17: Training of different initial AI models is implemented based on different training frameworks. That is, different training jobs correspond to the different training frameworks, and training tasks that do not belong to a same training job correspond to the different training frameworks. Because the third computing node may be configured to execute one or more training tasks, there may be one or more training frameworks on the third computing node. A training framework in which a communication topology needs to be updated on the third computing node is the training framework corresponding to the faulty training task, that is, the training framework in which the communication topology needs to be updated on the third computing node is the training framework corresponding to the faulty training job.

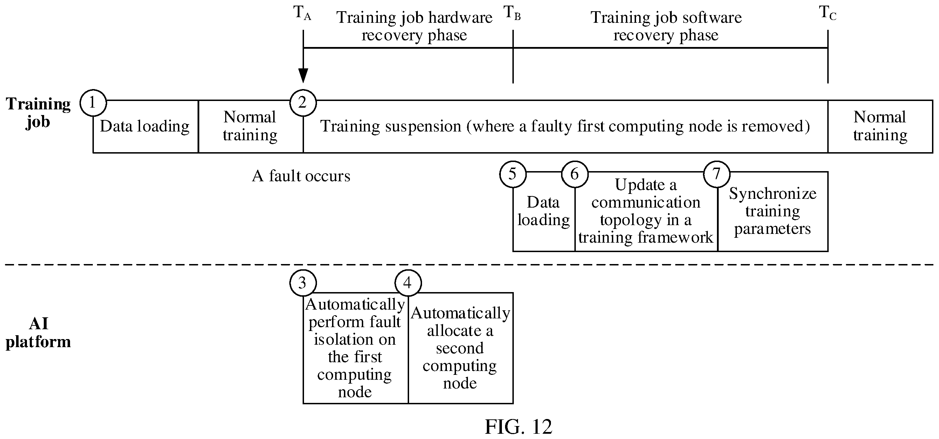

FIG. 12 is a schematic diagram of a processing procedure timeline of a training job according to an embodiment of this application. The processing procedure timeline of the training job is a processing procedure timeline of the training job for the distributed training of the AI model shown in FIG. 7. A processing procedure of the training job includes the following steps.
(1) Each of a plurality of computing nodes is configured to execute one training task of the training job. After the training job is started, each computing node performs data loading and starts to perform training after completing the data loading.
(2) There is a faulty first computing node in the plurality of computing nodes.
   When there is the first computing node in the plurality of computing nodes, fault recovery of the training job is performed. The fault recovery of the training job includes a training job hardware recovery phase and a training job software recovery phase. The training job hardware recovery phase includes the following steps (3) and (4), and the training job software recovery phase includes the following steps (5), (6), and (7).
(3) The AI platform automatically performs fault isolation on the first computing node.
(4) The AI platform automatically allocates a second computing node to replace the first computing node.
(5) The second computing node performs data loading.
(6) A third computing node that is not faulty in the plurality of computing nodes updates a communication topology in a training framework, and the second computing node creates a communication topology in the training framework.
(7) The second computing node synchronizes training parameters with the third computing node. Then, normal training is performed based on the second computing node and the third computing node.

It can be learned from FIG. 12 that in a training process of the AI model provided in this application, at least the following advantageous effects exist.
(1) In the training process, when the first computing node is faulty, the training job is faulty, but the training job does not directly exit; and after knowing that the training job is faulty, the AI platform 210 automatically allocates the second computing node to the training job, to replace the first computing node to continue to perform training. In this way, when the training job is not interrupted, the fault recovery is completed, and no manual intervention is required to restart the faulty training job, so that time consumed for the fault recovery is reduced.
(2) When the first computing node is faulty, the first computing node is removed, execution of a training task on the third computing node that is not faulty is suspended, and after the second computing node is allocated to replace the first computing node, the execution of the training task on the third computing node is resumed. In this way, only the second computing node needs to be re-applied for to replace the first computing node. This avoids re-applying for all the computing nodes required for the training job, and reduces a possibility that the fault recovery fails due to a failure to re-apply for the computing resource.
(3) Because only the second computing node is reallocated to replace the faulty first computing node, only the second computing node needs to pull a Ckpt file for startup. This avoids that all the computing nodes required for the training job pull the Ckpt file for restart, and reduces a training duration loss caused when the Ckpt file is used for startup.
(4) In a process of the fault recovery, only the second computing node needs to perform data loading. This avoids that all the computing nodes required for the training job perform data loading, and reduces a bandwidth required for the data loading.
(5) The second computing node obtains a latest training result by performing gradient synchronization with the third computing node. This reduces a training loss caused because the Ckpt file cannot be stored at a high frequency. For the faulty training job, a phase in which the training job is affected is as follows: In a process from a time point at which the first computing node is faulty to a time point at which the second computing node is added, the first computing node does not participate in calculation of a part of samples in training. A calculation result of the affected samples is (T/t) × (n/m), where T is fault recovery time, t is training duration of each round of training, n is a quantity of first computing nodes, and m is a total quantity of computing nodes required for the training job. In addition, the fault recovery time T may be reduced by optimizing the task scheduling module, so that impact of the fault on the entire training job can be reduced. The fault recovery time T is usually 1 to 2 minutes. For a training job (a large-scale training job) whose execution time is several hours, the lossless fault recovery for the training job can basically be implemented.

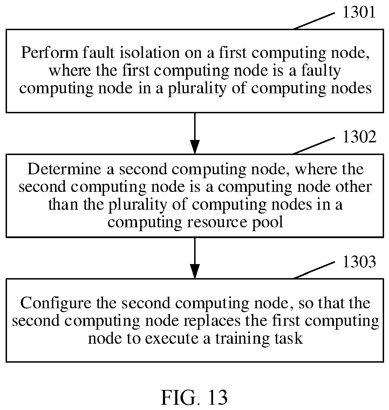

FIG. 13 is a flowchart of a process 1300 of another distributed training method for an artificial intelligence AI model according to an embodiment of this application. The process 1300 is described as a series of steps or operations. It should be understood that steps or operations of the process 1300 may be performed in various sequences and/or simultaneously, not limited to an execution sequence shown in FIG. 13. The process 1300 is applied to an AI platform, the AI platform is associated with a computing resource pool, the computing resource pool includes a plurality of computing nodes for distributed training of an AI model, and each of the plurality of computing nodes performs a training task for the distributed training of the AI model. The process 1300 includes, but is not limited to, the following steps or operations:

Step 1301: Perform fault isolation on a first computing node, where the first computing node is a faulty computing node in the plurality of computing nodes.

Step 1302: Determine a second computing node, where the second computing node is a computing node other than the plurality of computing nodes in the computing resource pool.

Step 1303: Configure the second computing node, so that the second computing node replaces the first computing node to execute a training task.

In this application, the AI platform may perform distributed training on the AI model. The AI platform is associated with the computing resource pool. The computing resource pool includes the plurality of computing nodes used for the distributed training of the AI model. Each of the plurality of computing nodes performs one training task for the distributed training of the AI model. For example, each computing node performs one training task for the distributed training of the AI model. In a distributed training process of the AI model, the AI platform may determine whether there is the faulty first computing node in the plurality of computing nodes. If determining that there is the faulty first computing node in the plurality of computing nodes, the AI platform performs fault isolation on the first computing node, so that the first computing node is no longer configured to perform the training task for the distributed training of the AI model. In addition, the AI platform may determine the second computing node other than the plurality of computing nodes in the computing resource pool, and configure the second computing node, so that the second computing node is used to replace the first computing node to perform the training task for the distributed training of the AI model. In this way, in this application, when the computing node for the distributed training of the AI model is faulty, the faulty first computing node is dynamically isolated, and the second computing node acts as supplement to replace the first computing node to continue the training. This ensures that the training process is not interrupted, thereby not affecting overall training duration, and reducing fault recovery duration. It should be understood that a calculation capability of the second computing node is the same as or equivalent to that of the first computing node, or a specification of the second computing node is the same as or equivalent to that of the first computing node. This ensures that the second computing node can successfully replace the first computing node. It should be noted that, if the first computing node further executes another training task for the distributed training of the AI model in addition to the training task for the distributed training of the AI model, after fault isolation is performed on the first computing node, the first computing node is no longer configured to execute the training task affected by the faulty first computing node. The second computing node replaces the first computing node to execute the training task affected by the faulty first computing node. The training task affected by the faulty first computing node includes one or more of the following: the training task for the distributed training of the AI model, and the another training task for the distributed training of the AI model.

In a possible implementation, the first computing node is the faulty computing node when the AI platform monitors one or more of the following cases: a hardware fault occurs on the first computing node, a training process corresponding to the training task executed by the first computing node exits, and the first computing node reports a fault.

In this implementation, the AI platform may monitor that the hardware fault occurs on the first computing node, the training process corresponding to the training task executed by the first computing node exits, and the first computing node reports the fault to the AI platform. If monitoring the one or more of the foregoing cases, the AI platform determines that the first computing node is the faulty computing node, and triggers determining that the second computing node replaces the first computing node to execute the training task. In this way, the AI platform can find in time that there is the fault in the distributed training of the AI model, so that fault recovery duration is reduced. It should be noted that, if the first computing node further executes the another training task for the distributed training of the AI model in addition to the training task for the distributed training of the AI model, when the hardware fault occurs on the first computing node, the training task affected by the faulty first computing node includes the training task for the distributed training of the AI model and the another training task for the distributed training of the AI model. Further, that a training process corresponding to the training task executed by the first computing node exits includes that the training process corresponding to the training task that is for the distributed training of the AI model and that is executed by the first computing node exits and a training process corresponding to the another training task for the distributed training of the AI model exits. That is, the first computing node is the faulty computing node provided that the training process exits on the first computing node. When the training process corresponding to the training task for the distributed training of the AI model exits, the training task affected by the faulty first computing node is the training task for the distributed training of the AI model. When the training process corresponding to the another training task for the distributed training of the AI model exits, the training task affected by the faulty first computing node is the another training task for the distributed training of the AI model. When both the training process corresponding to the training task for the distributed training of the AI model and the training process corresponding to the another training task for the distributed training of the AI model exit, the training task affected by the faulty first computing node includes the training task for the distributed training of the AI model and the another training task for the distributed training of the AI model. In addition, the fault reported by the first computing node includes the fault reported by the first computing node for the training task for the distributed training of the AI model and the fault reported by the first computing node for the another training task for the distributed training of the AI model. That is, the first computing node is the faulty computing node provided that the first computing node reports the fault. When the fault reported by the first computing node is the fault reported by the first computing node for the training task for the distributed training of the AI model, the training task affected by the faulty first computing node is the training task for the distributed training of the AI model. When the fault reported by the first computing node includes the fault reported by the first computing node for the another training task for the distributed training of the AI model, the training task affected by the faulty first computing node is the another training task for the distributed training of the AI model. When the fault reported by the first computing node includes the fault reported by the first computing node for the training task for the distributed training of the AI model and the fault reported by the first computing node for the another training task for the distributed training of the AI model, the training task affected by the faulty first computing node includes the training task for the distributed training of the AI model and the another training task for the distributed training of the AI model.

In a possible implementation, if the AI platform monitors that the hardware fault occurs on the first computing node, and does not monitor that the training process corresponding to the training task executed by the first computing node exits, after the performing fault isolation on a first computing node, the method includes: sending a training process stopping notification to the first computing node, where the training process stopping notification indicates the first computing node to stop the training process corresponding to the executed training task.

In this implementation, for some types of hardware faults, the training process on the computing node does not exit or stop, and only calculation performance of the computing node is affected. When the hardware fault occurs on the first computing node, to ensure that the second computing node can successfully replace the first computing node to execute the training task, the AI platform sends the training process stopping notification to the first computing node, to indicate the first computing node to stop the training process corresponding to the executed training task. In this way, when the second computing node has executed the training task originally executed by the first computing node, the first computing node does not continue the execution of the training task. It should be understood that the training process stopping notification indicates the first computing node to stop the training process corresponding to the training task affected by the faulty first computing node. It should be noted that, if the first computing node further executes the another training task for the distributed training of the AI model in addition to the training task for the distributed training of the AI model, when the training task affected by the faulty first computing node is the training task for the distributed training of the AI model, the training process stopping notification indicates the first computing node to stop the training process corresponding to the training task for the distributed training of the AI model. When the training task affected by the faulty first computing node is the another training task for the distributed training of the AI model, the training process stopping notification indicates the first computing node to stop the training process corresponding to the another training task for the distributed training of the AI model. When the training task affected by the faulty first computing node includes the training task for the distributed training of the AI model and the another training task for the distributed training of the AI model, the training process stopping notification indicates the first computing node to stop the training process corresponding to the training task for the distributed training of the AI model and the training process corresponding to the another training task for the distributed training of the AI model.

In a possible implementation, after the performing fault isolation on a first computing node, and before the determining a second computing node, the method further includes: sending a training process suspension notification to a third computing node, where the third computing node is a computing node that is not faulty in the plurality of computing nodes, and the training process suspension notification indicates the third computing node to suspend a training process corresponding to a training task for the distributed training of the AI model.

In this implementation, the distributed training of the AI model includes calculation of the plurality of computing nodes and gradient synchronization. When the first computing node is faulty, if the training process of the third computing node that is not faulty is not suspended, the third computing node performs gradient synchronization after obtaining a gradient through calculation. However, the first computing node undergoes the fault isolation due to the fault, and cannot participate in the gradient synchronization. In this case, a problem occurs in the gradient synchronization. Therefore, to avoid the problem that occurs in the gradient synchronization, the training process executed by the third computing node needs to be suspended until a newly added second computing node participates in performing training.

In a possible implementation, the training process suspension notification specifically indicates the third computing node to suspend, after the third computing node completes gradient calculation of the distributed training of the AI model, the training process corresponding to the training task for the distributed training of the AI model.

In this implementation, after the gradient calculation ends, the third computing node that is not faulty suspends the training process executed by the third computing node. In this way, after the newly added second computing node participates in performing training, gradient synchronization may be directly performed, so that fault recovery duration is reduced.

In a possible implementation, after the determining a second computing node, the method further includes: sending a training continuing notification to the third computing node, where the training continuing notification indicates the third computing node to delete the first computing node and add the second computing node in a communication topology in a training framework of the distributed training of the AI model, and to restore the training process corresponding to the training task for the distributed training of the AI model, and the communication topology is used for gradient synchronization of the distributed training of the AI model.

In this implementation, the AI platform sends a training continuing notification to the third computing node. After receiving the training continuing notification, the third computing node knows that the second computing node replaces the faulty first computing node to perform training. Therefore, the first computing node is deleted and the second computing node is added in a communication topology in a training framework of the distributed training of the AI model. Therefore, the third computing node may perform gradient synchronization with the second computing node, so that the second computing node obtains synchronized training parameters.

In a possible implementation, if the second computing node has not been determined, the method further includes: sending a training continuing notification to the third computing node, where the training continuing notification indicates the third computing node to delete the first computing node in a communication topology in a training framework of the distributed training of the AI model, and to restore the training process corresponding to the training task for the distributed training of the AI model, and the communication topology is used for gradient synchronization of the distributed training of the AI model.

In this implementation, if the second computing node cannot be applied for to replace the faulty first computing node, to ensure that the training is not interrupted or does not exit, and the training can continue, the faulty first computing node is discarded, and only the third computing node that is not faulty is configured to perform training.

It should be noted that, for descriptions of the embodiment shown in FIG. 13, refer to descriptions of the embodiments shown in FIG. 1 to FIG. 12.

Functions of the task scheduling module 211 and the resource management module 212 in the AI platform 210 in FIG. 2 may be performed by a distributed training apparatus for an AI model. The distributed training apparatus for an AI model is used in an AI platform, the AI platform is associated with a computing resource pool, the computing resource pool includes a plurality of computing nodes for distributed training of an AI model, and each of the plurality of computing nodes performs a training task for the distributed training of the AI model. The distributed training apparatus for an AI model may be implemented as a part or an entire of the apparatus by software, hardware, or a combination thereof. The distributed training apparatus for an AI model may implement the procedure described in another embodiment of this application. In the distributed training apparatus for an Al model, the resource management module 212 is configured to perform fault isolation on a first computing node, where the first computing node is a faulty computing node in the plurality of computing nodes; and the task scheduling module 211 is configured to: determine a second computing node, where the second computing node is a computing node other than the plurality of computing nodes in the computing resource pool; and configure the second computing node, so that the second computing node replaces the first computing node to execute a training task.

In a possible implementation, the first computing node is the faulty computing node when the AI platform monitors one or more of the following cases: a hardware fault occurs on the first computing node, a training process corresponding to the training task executed by the first computing node exits, and the first computing node reports a fault.

In a possible implementation, if the AI platform monitors that the hardware fault occurs on the first computing node, and does not monitor that the training process corresponding to the training task executed by the first computing node exits, after the performing fault isolation on a first computing node, the task scheduling module 211 is further configured to send a training process stopping notification to the first computing node, where the training process stopping notification indicates the first computing node to stop the training process corresponding to the executed training task.

In a possible implementation, after the performing fault isolation on a first computing node, and before the determining a second computing node, the task scheduling module 211 is further configured to send a training process suspension notification to a third computing node, where the third computing node is a computing node that is not faulty in the plurality of computing nodes, and the training process suspension notification indicates the third computing node to suspend a training process corresponding to a training task for the distributed training of the AI model.

In a possible implementation, the training process suspension notification specifically indicates the third computing node to suspend, after the third computing node completes gradient calculation of the distributed training of the AI model, the training process corresponding to the training task for the distributed training of the AI model.

In a possible implementation, after the determining a second computing node, the task scheduling module 211 is further configured to send a training continuing notification to the third computing node, where the training continuing notification indicates the third computing node to delete the first computing node and add the second computing node in a communication topology in a training framework of the distributed training of the AI model, and to restore the training process corresponding to the training task for the distributed training of the AI model, and the communication topology is used for gradient synchronization of the distributed training of the AI model.

In a possible implementation, if the second computing node has not been determined, the task scheduling module 211 is further configured to send a training continuing notification to the third computing node, where the training continuing notification indicates the third computing node to delete the first computing node in a communication topology in a training framework of the distributed training of the AI model, and to restore the training process corresponding to the training task for the distributed training of the AI model, and the communication topology is used for gradient synchronization of the distributed training of the AI model.

Division into the modules in this embodiment of this application is an example, is merely logical function division, and may alternatively be other division during actual implementation. In addition, the functional modules in embodiments of this application may be integrated in one processor, or may exist as physically independent. Alternatively, two or more modules may be integrated into one module. The integrated module may be implemented in a form of hardware, or may be implemented in a form of a software functional module.

This application further provides a computing device 500 shown in FIG. 5. A processor 502 in the computing device 500 reads a program and a dataset that are stored in the memory 501, to perform the method performed by the foregoing AI platform.

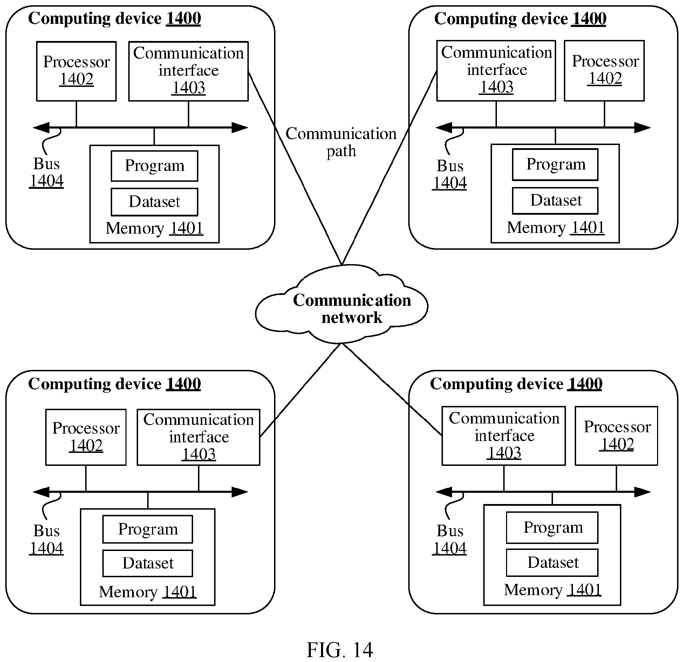

Because all the modules in the AI platform 210 provided in this application may be deployed in a distributed manner on a plurality of computers in a same environment or different environments, this application further provides a computing device shown in FIG. 14. The computing device includes a plurality of computers 1400. Each computer 1400 includes a memory 1401, a processor 1402, a communication interface 1403, and a bus 1404. The memory 1401, the processor 1402, and the communication interface 1403 are communicatively connected to each other through the bus 1404.

The memory 1401 may be a read-only memory, a static storage device, a dynamic storage device, or a random access memory. The memory 1401 may store a program. When the program stored in the memory 1401 is executed by the processor 1402, the processor 1402 and the communication interface 1403 are configured to perform some methods for training an AI model by the AI platform. The memory may further store a training dataset. For example, some of storage resources in the memory 1401 are divided into a dataset storage module, configured to store the training dataset required for the AI platform.

The processor 1402 may be a general-purpose central processing unit, a microprocessor, an application-specific integrated circuit, a graphics processing unit, or one or more integrated circuits.

The communication interface 1403 uses a transceiver module, for example, but not limited to a transceiver, to implement communication between the computer 1400 and another device or a communication network. For example, the training dataset may be obtained through the communication interface 1403.

The bus 1404 may include a path for transmitting information between components (for example, the memory 1401, the processor 1402, and the communication interface 1403) of the computer 1400.

A communication path is established between the computers 1400 through the communication network. Any one or more of the following is/are run on each computer 1400: the task scheduling module 211, the resource management module 212, the data storage module 213, the algorithm management module 214, and the human-machine interaction module 215. Any computer 1400 may be a computer (for example, a server) in a cloud data center, a computer in an edge data center, or a terminal computing device.

The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a twisted pair) or wireless (for example, infrared, radio, or microwave) manner. The computer-readable storage medium stores computer program instructions provided for the AI platform. The computer-readable storage medium may be any medium accessible by a computer, or a data storage device, such as a server or a data center, integrating one or more usable media. The medium may be a magnetic medium (for example, a floppy disk, a hard disk, or a magnetic tape), an optical medium (for example, an optical disc), or a semiconductor medium (for example, a solid-state drive).

The descriptions of procedures corresponding to the foregoing accompanying drawings have respective focuses. For a part that is not described in detail in a procedure, refer to related descriptions of another procedure.

This application further provides a computer-readable storage medium. The computer-readable storage medium stores computer instructions, and when the computer instructions in the computer-readable storage medium are executed by a computing device, the computing device is enabled to perform the procedures or the functions described in embodiments of this application.

All or some of the foregoing embodiments may be implemented by using software, hardware, or a combination thereof. When software is used to implement the embodiments, all or some of the embodiments may be implemented in a form of a computer program product. The computer program product of the AI platform provided in this application includes one or more computer instructions for performing operations of the AI platform. When these computer program instructions are loaded and executed on a computer, all or some of the procedures or functions described in embodiments of this application are generated.

It should be understood that in embodiments of this application, sequence numbers of the foregoing processes do not mean an execution sequence. An execution sequence of the processes should be determined based on functions and internal logic of the processes, and should not constitute any limitation on the implementation processes of embodiments of this application.

Persons of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

The units described as separate components may be or may not be physically separate, and components displayed as units may be or may not be physical units, and may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods shown in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A sequence of the steps in the method in embodiments of this application may be adjusted, combined, or deleted based on an actual requirement.

The modules in the apparatus in embodiments of this application may be combined, divided, and deleted based on an actual requirement.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments, or make equivalent replacements to some technical features thereof. However, the modifications and replacements do not make the essence of the corresponding technical solutions depart from the scope of the technical solutions of embodiments of this application.

## Claims

1. A distributed training method for an artificial intelligence AI model, applied to an AI platform, wherein the AI platform is associated with a computing resource pool, the computing resource pool comprises a plurality of computing nodes for distributed training of an AI model, and each of the plurality of computing nodes performs a training task for the distributed training of the AI model; and the method comprises:
performing fault isolation on a first computing node, wherein the first computing node is a faulty computing node in the plurality of computing nodes;
determining a second computing node, wherein the second computing node is a computing node other than the plurality of computing nodes in the computing resource pool; and
configuring the second computing node, so that the second computing node replaces the first computing node to execute a training task.

2. The method according to claim 1, wherein the first computing node is the faulty computing node when the AI platform monitors one or more of the following cases:
a hardware fault occurs on the first computing node, a training process corresponding to the training task executed by the first computing node exits, and the first computing node reports a fault.

3. The method according to claim 2, wherein if the AI platform monitors that the hardware fault occurs on the first computing node, and does not monitor that the training process corresponding to the training task executed by the first computing node exits, after the performing fault isolation on a first computing node, the method comprises:
sending a training process stopping notification to the first computing node, wherein the training process stopping notification indicates the first computing node to stop the training process corresponding to the executed training task.

4. The method according to any one of claims 1 to 3, wherein after the performing fault isolation on a first computing node, and before the determining a second computing node, the method further comprises:
sending a training process suspension notification to a third computing node, wherein the third computing node is a computing node that is not faulty in the plurality of computing nodes, and the training process suspension notification indicates the third computing node to suspend a training process corresponding to a training task for the distributed training of the AI model.

5. The method according to claim 4, wherein the training process suspension notification specifically indicates the third computing node to suspend, after the third computing node completes gradient calculation of the distributed training of the AI model, the training process corresponding to the training task for the distributed training of the AI model.

6. The method according to claim 4 or 5, wherein after the determining a second computing node, the method further comprises:
sending a training continuing notification to the third computing node, wherein the training continuing notification indicates the third computing node to delete the first computing node and add the second computing node in a communication topology in a training framework of the distributed training of the AI model, and to restore the training process corresponding to the training task for the distributed training of the AI model, and the communication topology is used for gradient synchronization of the distributed training of the AI model.

7. The method according to claim 4 or 5, wherein if the second computing node has not been determined, the method further comprises:
sending a training continuing notification to the third computing node, wherein the training continuing notification indicates the third computing node to delete the first computing node in a communication topology in a training framework of the distributed training of the AI model, and to restore the training process corresponding to the training task for the distributed training of the AI model, and the communication topology is used for gradient synchronization of the distributed training of the AI model.

8. A distributed training apparatus for an artificial intelligence AI model, used in an AI platform, wherein the AI platform is associated with a computing resource pool, the computing resource pool comprises a plurality of computing nodes for distributed training of an AI model, and each of the plurality of computing nodes performs a training task for the distributed training of the AI model; and the apparatus comprises:
a resource management module, configured to perform fault isolation on a first computing node, wherein the first computing node is a faulty computing node in the plurality of computing nodes; and
a task scheduling module, configured to: determine a second computing node, wherein the second computing node is a computing node other than the plurality of computing nodes in the computing resource pool; and
configure the second computing node, so that the second computing node replaces the first computing node to execute a training task.

9. The apparatus according to claim 8, wherein the first computing node is the faulty computing node when the AI platform monitors one or more of the following cases:
a hardware fault occurs on the first computing node, a training process corresponding to the training task executed by the first computing node exits, and the first computing node reports a fault.

10. The apparatus according to claim 9, wherein if the AI platform monitors that the hardware fault occurs on the first computing node, and does not monitor that the training process corresponding to the training task executed by the first computing node exits, after the performing fault isolation on a first computing node, the task scheduling module is further configured to:
send a training process stopping notification to the first computing node, wherein the training process stopping notification indicates the first computing node to stop the training process corresponding to the executed training task.

11. The apparatus according to any one of claims 8 to 10, wherein after the performing fault isolation on a first computing node, and before the determining a second computing node, the task scheduling module is further configured to:
send a training process suspension notification to a third computing node, wherein the third computing node is a computing node that is not faulty in the plurality of computing nodes, and the training process suspension notification indicates the third computing node to suspend a training process corresponding to a training task for the distributed training of the AI model.

12. The apparatus according to claim 11, wherein the training process suspension notification specifically indicates the third computing node to suspend, after the third computing node completes gradient calculation of the distributed training of the AI model, the training process corresponding to the training task for the distributed training of the AI model.

13. The apparatus according to claim 11 or 12, wherein after the determining a second computing node, the task scheduling module is further configured to:
send a training continuing notification to the third computing node, wherein the training continuing notification indicates the third computing node to delete the first computing node and add the second computing node in a communication topology in a training framework of the distributed training of the AI model, and to restore the training process corresponding to the training task for the distributed training of the AI model, and the communication topology is used for gradient synchronization of the distributed training of the AI model.

14. The apparatus according to claim 11 or 12, wherein if the second computing node has not been determined, the task scheduling module is further configured to:
send a training continuing notification to the third computing node, wherein the training continuing notification indicates the third computing node to delete the first computing node in a communication topology in a training framework of the distributed training of the AI model, and to restore the training process corresponding to the training task for the distributed training of the AI model, and the communication topology is used for gradient synchronization of the distributed training of the AI model.

15. A computing device, wherein the computing device comprises a memory and a processor, and the memory is configured to store computer instructions; and
the processor executes the computer instructions stored in the memory, to perform the method according to any one of claims 1 to 7.

16. A computer-readable storage medium, wherein the computer-readable storage medium stores computer program code, and when the computer program code is executed by a computing device, the computing device performs the method according to any one of claims 1 to 7.

17. A computer program product, wherein when the computer program product runs on a computing device, the computing device is enabled to perform the method according to any one of claims 1 to 7.
